(19) **Europäisches Patentamt**
**European Patent Office**
**Office européen des brevets**

(11) **EP 3 008 441 B1**

(12) **EUROPÄISCHE PATENTSCHRIFT**

(45) Veröffentlichungstag und Bekanntmachung des Hinweises auf die Patenterteilung:
**10.03.2021 Patentblatt 2021/10**

(21) Anmeldenummer: **14724756.3**

(22) Anmeldetag: **19.05.2014**

(51) Int Cl.:
*G01M 5/00* (2006.01)   *G01L 1/22* (2006.01)
*G01L 5/00* (2006.01)

(86) Internationale Anmeldenummer:
**PCT/EP2014/060191**

(87) Internationale Veröffentlichungsnummer:
**WO 2014/198494 (18.12.2014 Gazette 2014/51)**

(54) **MESSSYSTEM MIT EINEM DRUCKGERÄT SOWIE VERFAHREN ZUR ÜBERWACHUNG UND/ODER ÜBERPRÜFUNG EINES SOLCHEN DRUCKGERÄTS**

MEASURING SYSTEM HAVING A PRESSURE DEVICE AND METHOD FOR MONITORING AND/OR CHECKING SUCH A PRESSURE DEVICE

SYSTÈME DE MESURE POURVU D'UN APPAREIL SOUS PRESSION ET PROCÉDÉ POUR SURVEILLER ET/OU CONTRÔLER UN TEL APPAREIL SOUS PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2013 DE 102013106155**

(43) Veröffentlichungstag der Anmeldung:
**20.04.2016 Patentblatt 2016/16**

(73) Patentinhaber: **Endress+Hauser Flowtec AG**
**4153 Reinach (CH)**

(72) Erfinder:
• **ZHU, Hao**
**85354 Freising (DE)**
• **RIEDER, Alfred**
**84032 Landshut (DE)**
• **BERNHARD, Holger**
**79639 Grenzach-Wyhlen (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**JP-A- 2009 041 924      US-A- 4 546 649**
**US-A1- 2012 259 559**

**Beschreibung**

Die Erfindung betrifft ein Verfahren zur Überwachung und/oder Überprüfung eines ein von einer, beispielsweise metallischen, Wandung umhülltes Lumen aufweisenden Druckgeräts, nämlich eines Geräts zum Führen und/oder Vorhalten eines nominell mit einem statischen Überdruck bzw. einem Druck von mehr als 1 bar auf die Wandung einwirkenden Fluids, beispielsweise eines Gases, einer Flüssigkeit oder einer fließfähigen Dispersion, in nämlichem Lumen. Darüberhinaus betrifft die Erfindung ein, insb. zur Realisierung nämlichen Verfahrens geeignetes, Meßsystem zum Ermitteln von eine, beispielsweise fluiddynamische und/oder thermodynamische, Meßgröße, wie z.B. eine Volumendurchflußrate, eine Massendurchflußrate, einen Dichte, eine Viskosität, einen Druck oder eine Temperatur, eines Fluids repräsentierenden Meßwerten, welches Meßsystem ein solches Druckgerät umfaßt.

Druckgeräte, beispielsweise auch solche, die der *"Richtlinie 97/23/EG des Europäischen Parlaments und des Rates vom 29. Mai* 1997 *zur Angleichung der Rechtsvorschriften der Mitgliedstaaten über Druckgeräte"* oder damit korrespondieren nationalen - gelegentlich auch als Druckgeräterichtlinien bezeichneten - Rechtsvorschriften, wie etwa der *"Vierzehnten Verordnung zum Produktsicherheitsgesetz"* (14. ProdSV) oder dem *"ASUE Boiler and Pressure Vessel Code"* (ASUE U-Stamp), unterliegen, finden in industriellen Anwendungen, nicht zuletzt auch in der industriellen Meß- und Automatisierungstechnik, vielfältige Verwendung, beispielsweise inform von Tanks für Flüssiggas, Dampfkesseln oder anderen Behältern zum Aufnehmen bzw. Vorhalten von gegenüber der umgebenden Atmosphäre unter erhöhtem Druck stehenden Fluiden, inform von für den Transport solcher unter erhöhtem Druck stehenden Fluide geeigneten Rohrleitungen oder auch inform von mittels solcher Behälter und/oder Rohrleitungen gebildeten, mithin regelmäßig mit einem erhöhten Betriebsdruck betriebenen Anlagen. Als weitere Vertreter von solchen Druckgeräten sind zudem auch mit vorgenannten Rohrleitungen bzw. Behältern kommunizierende, mithin von darin geführtem Fluid kontaktierte bzw. auch von nämlichem Fluid durchströmte Meßwandler zum Generieren eines mit einer vom Fluid zu erfassenden Meßgröße korrespondierenden Meßsignal bzw. mittels solcher Meßwandler und daran elektrisch gekoppelter Umformer-Elektronik gebildete Meßsysteme, wie z.B. Coriolis-Massendurchfluß-Meßgerät, Wirbeldurchfluß-Meßgeräte oder auch Ultraschall-Durchfluß-Meßgeräte oder damit gebildete Meßapparaturen, zu nennen, nicht zuletzt auch solche, bei denen das Lumen des Druckgeräts mittels einer wenigstens ein betriebsgemäß Fluid führenden Meßrohrs aufweisenden Rohranordnung gebildet ist. Beispiele für solche, regelmäßig auch als ein einer oder mehreren der vorgenannten Rechtsvorschriften unterliegende und/oder als Meßsysteme für zumindest gelegentlich unter hohem Druck von über 50 bar stehende Fluide ausgebildete, Druckgeräte, sind u.a. in der EP-A 816 807, der EP-A 919 793, der EP-A 1 001 254, der US-A 2001/0029790, der US-A 2004/0261541, der US-A 2005/0039547, der US-A 2006/0266129, der US-A 2007/0095153, der US-A 2007/0234824, der US-A 2008/0141789, der US-A 2011/0113896, der US-A 2011/0161018, der US-A 2011/0219872, der US-A 2012/0123705, der US-A 46 80 974, der WO-A 2005/050145, der WO-A 2009/134268, der WO-A 90/15310, der WO-A 95/16897, der WO-A 96/05484, der WO-A 97/40348, der WO-A 98/07009 oder der WO-A 99/39164 beschrieben.

Die darin gezeigten Meßsysteme sind jeweils mittels eines in den Verlauf einer Rohrleitung einsetzbaren, im Betrieb von Fluid durchströmten Meßwandlers vom Vibrationstyp gebildet, wobei der jeweilige Meßwandler jeweils eine mittels wenigstens eines, im wesentlichen gerades oder zumindest abschnittsweise gekrümmten, z.B. U-, oder V-förmigen, Meßrohr gebildete Rohranordnung umfaßt, derart, daß Wandung und Lumen auch jeweils mittels des wenigstens einen Meßrohrs gebildet sind und nämliches Lumen im Betrieb mit einem Lumen der angeschlossenen Rohrleitung kommuniziert.

Im Betrieb des Druckgeräts bzw. des damit gebildeten Meßsystems wird das wenigstens eine Meßrohr zwecks Generierung von durch das hindurchströmende Fluid, beispielsweise von dessen Massendurchflußrate, dessen Dichte und/oder dessen Viskosität, mit beeinflußten, jeweils auch als Meßsignal des Meßwandlers dienenden Schwingungssignalen aktiv zu mechanischen Schwingungen angeregt. Weitere Beispiele für solche mittels eines Druckgeräts gebildete Meßsysteme sind u.a. auch in der JP-A 2009041924, der US-A 45 46 649, der US-A 57 96 011, der US-B 72 84 449, der US-B 70 17 424, der US-B 69 10 366, der US-B 68 40 109, der US-A 55 76 500, der US-B 66 51 513, der US-A 2005/0072238, der US-A 2006/0225493, der US-A 2008/0072688, der US-A 2011/0265580, WO-A 2004/023081, der WO-A 2006/009548, WO-A 2008/042290, der WO-A 2007/040468 oder der WO-A 2013/060659 beschrieben.

Jeder der Meßwandler weist zudem ein die Rohranordnung umgebendes, nämlich eine die Rohranordnung aufnehmende Kavität bildendes Meßwandler-Gehäuse sowie, angeformt an das Meßwandler-Gehäuse bzw. darin integriert, einen einlaßseitigen sowie einen auslaßseitigen Anschlußflansch zum Verbinden der Rohranordnung mit der Rohrleitung auf. Für den Fall, daß die Rohranordnung, mithin das Lumen mittels zwei oder mehr Meßrohren gebildet ist, sind die Meßrohre zumeist unter Bildung strömungstechnisch zueinander parallel geschalteter Strömungspfaden über ein sich zwischen den Meßrohren und dem einlaßseitigen Anschlußflansch erstreckenden einlaßseitig Strömungsteiler sowie über ein sich zwischen den Meßrohren und dem auslaßseitigen Anschlußflansch erstreckenden auslaßseitig Strömungsteiler in die Rohrleitung eingebunden. Das Meßwandler-Gehäuse dient neben der Halterung der innerhalb der durch das Meßwandler-Gehäuse gebildeten Kavität plazierten Rohranordnung im besonderen auch dazu, diese sowie andere innen liegenden Bauteile, beispielsweise eine Sensoranordnung des Meßwandlers, vor äußeren Umwelteinflüssen, wie z.B. Staub oder Spritzwasser, zu schützen, mithin eine möglichst hermetisch dichte Kavität bereitzustellen. Nicht zuletzt bei Druckgeräten der in Rede stehenden Art wird seitens der Anwender an derartige Meßwandler-Gehäuse darüberhinaus gelegentlich auch die Anforderung gestellt, daß sie im Falle einer undichten oder berstenden Rohranordnung dem dann zumeist deutlich über dem atmosphärischen Außendruck liegenden statischen Innendruck innerhalb der Kavität zumindest für eine vorgegebene Dauer leckfrei standhalten, mithin eine gewisse Druckfestigkeit aufweisen, vgl. hierzu auch die eingangs erwähnten US-A 2006/0266129, US-A 2005/0039547, US-A 2001/0029790, WO-A 90/15310, EP-A 1 001 254 bzw. die internationale Patentanmeldung PCT/EP2012/070924. Nicht zuletzt für Anwendungen mit toxischen oder leicht entzündbaren Fluiden muß das Meßwandler-Gehäuse dabei gelegentlich sogar auch die an Sicherheitsbehälter gestellten Anforderungen erfüllen können.

Meßsystem der in Rede stehenden Art, mithin damit gebildet Druckgeräte sind zudem üblicherweise mittels eines innerhalb des übergeordneten Datenverarbeitungssystems vorgesehenen - leitungsgebundenen und/oder funkbasierten - Datenübertragungsnetzwerks miteinander und/oder mit entsprechenden elektronischen Prozeß-Steuerungen verbunden, beispielsweise vor Ort installierte Speicherprogrammierbare Steuerungen (SPS) oder in einer entfernten Leitwarte stationiere Prozeß-Leitrechner, wohin die mittels des Meßsystems erzeugten und in geeigneter Weise digitalisierten und entsprechend codierten Meßwerte weitergesendet werden. Mittels Prozeß-Leitrechner können, unter Verwendung entsprechend installierter Softwarekomponenten, die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Dementsprechend dient das Datenverarbeitungssystem üblicherweise auch dazu, das von der Umformer-Elektronik gelieferte Meßwertesignal entsprechend den Anforderungen nachgelagerter Datenübertragungsnetzwerke zu konditionieren, beispielsweise geeignet zu digitalisieren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die von der jeweiligen Umformer-Elektronik empfangenen Meßwerte vor- und/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, CAN, CAN-OPEN RACKBUS-RS 485, PROFIBUS etc., oder beispielsweise auch Netzwerke auf Basis des ETHERNET-Standards sowie die entsprechenden, zumeist anwendungsübergreifend standardisierten Übertragungs-Protokolle.

Druckgeräte der in Rede stehenden Art können während des Betriebes gelegentlich erhöhten, ggf. auch über vorab vereinbarte Grenzwerte hinausgehende, mithin für die Integrität des Druckgeräts schädlichen Belastungen ausgesetzt sein, sei es durch unerwünschte Überbelastungen hinsichtlich des Betriebsdrucks, durch Auftreten von unerwünschten Inhomogenitäten in einem, ggf. auch hohe Strömungsgeschwindigkeiten von mehr als 10 ms$^{-1}$ aufweisenden Fluid, beispielsweise inform von im strömenden Fluid mitgeführten Feststoffpartikeln und/oder von in flüssiges Trägermedium eingeschlossenen Gasblasen, und/oder durch unerwünschte thermische Überlastung, beispielsweise infolge von zu hohen Temperaturen des jeweiligen Fluids und/oder ungünstigen zeitlichen Temperaturverläufen, einhergehend mit für die Integrität des Druckgerät ungünstigen räumlichen Temperaturverteilungen. Infolge solcher Belastungen bzw. Überbelastungen kann die Wandung des Druckgeräts partiell so beschädigt werden - etwa infolge einer plastischen Verformung der Wandung und/oder infolge eines Verschleißes der Wandung, nämlich eines Materialabtrags aus deren dem Lumen zugewandten Oberfläche -, daß das Druckgerät nur noch eine im Vergleich zu einer ursprünglichen bzw. nominellen Druckfestigkeit verminderte Druckfestigkeit aufweist; dies beispielsweise auch derart, daß eine Schädigung der Wandung innerhalb sehr kurzer Zeit über eine vorab für das jeweilige Druckgerät festgelegte kritische Schädigung hinausgeht. Nämliche kritische Schädigung der Wandung kann zum Beispiel einer für den jeweiligen Typ bzw. die jeweilige Baureihe des Druckgerät spezifisch ermittelten Schädigung entsprechen, die eine, ggf. auch sofortige, Inspektion des jeweiligen Druckgerät erfordert, und/oder die mit einer einen alsbaldigen bzw. außerplanmäßigen Austausch des Druckgeräts erfordernden verminderten Restlebensdauer nämlichen Druckgeräts korrespondiert.

Für den erwähnten Fall, daß das Druckgerät ein Meßwandler bzw. Bestandteil eines Meßsystem ist, kann die für das jeweilige Druckgerät festgelegte kritische Schädigung auch mit einer aus solchen Schädigung resultierenden verminderten Meßgenauigkeit des Meßsystems bzw. einem, ggf. nicht mehr tolerierbaren, erhöhten systematischen Meßfehler bei der Generierung des Meßsignals entsprechen, beispielsweise infolge einer Schädigung des jeweiligen wenigstens eine Meßrohrs. Von besonderem Interesse sind hierbei auch solche Meßsysteme, bei denen, wie bereits erwähnt, das Druckgerät mittels eines Meßwandlers vom Vibrationstyp gebildet ist. Zum einen sind deren jeweilige Meßrohre zwecks Erzielung einer möglichst hohen Empfindlichkeit von deren Schwingungssignalen, nicht zuletz auch gegenüber der vom jeweiligen Fluid zu messenden Massendurchflußrate bzw. Dichte, zumeist möglichst dünnwandig ausgebildet, mithin weist die jeweilige Rohranordnung eines solchen Meßwandler üblicherweise Wandungen mit einer vergleichsweise geringen, nämlich nur geringe bzw. minimal zulässige Sicherheitsreserven hinsichtlich der Druckfestigkeit beibringende Wandstärken auf. Zum anderen können aber auch bereits geringfügige, nämlich die Druckfestigkeit der Rohranordnung bzw. des damit gebildeten Druckgeräts noch nicht auf ein unzulässig niedriges Maß herabsenkende Schädigungen der Wandung von Interesse sein, nachdem, wie u.a. auch in den eingangs erwähnten EP-A 816 807, WO-A 2005/050145, WO-A 99/39164, WO-A 96/05484, US-A 2007/0095153 bzw. US-A 2012/0123705 erörtert, auch solche, zumeist auch räumlich eher ungleichmäßig über die Rohranordnung verteilt auftretenden Schädigungen erhebliche Auswirkungen auf die Meßgenauigkeit des Meßsystems, nicht zuletzt auch jene mit der die Massendurchflußrate bzw. die Dichte gemessen werden, haben kann.

Verfahren bzw. Meßsysteme mit Meßandordnungen, die geeignet sind, unerwünscht bzw. unzulässig hohe Schädigungen der vorgennanten Art an solchen mittels Meßwandlers vom Vibrationstyp gebildeten Druckgeräten möglichst frühzeitig detektieren bzw. prognostizieren zu können, bzw. ein Ausmaß solcher Schädigungen quantitativ abschätzen zu können, sind u.a. in den eingangs erwähnten US-A 2007/0095153, US-A 2006/0266129, EP-A 816 807, US-A 2012/0123705, WO-A 2005/050145, WO-A 96/05484 oder WO-A 99/39164 beschrieben. Grundsätzlich basieren die darin gezeigten Verfahren auf der Auswertung von mittels des Meßwandlers im Betrieb gelieferten Schwingungssignalen, ggf. auch unter zusätzlicher Berücksichtigung von die jeweiligen Schwingungen des wenigstens einen Meßrohrs bewirkenden Anregungssignalen. Wenngleich nämliche Verfahren bzw. Meßanordnungen bei mittels Meßwandler vom Vibrationstyp gebildeten Meßsystemen bzw. Druckgeräten sehr vorteilhaft verwendet werden können bzw. auch in zunehmendem Maß zur Anwendung gelangen, ist ein Nachteil derartiger Verfahren bzw. Meßanordnungen dementsprechend darin zu sehen, daß sie auf für solche Meßsysteme spezifischen Meßsignalen - hier den Schwingungssignalen - basieren und somit ausschließlich für ebensolche Meßsysteme, mithin tatsächlich nur für einen relativ kleinen Anteil aus der Gesamtheit der Druckgeräte anwendbar sind. Zudem können die genannten Verfahren bzw. Meßanordnung gelegentlich auch gewisse Querempfindlichkeiten auf andere als die eigentliche Schädigung repräsentierende Meßgrößen, nicht zuletzt auf die oben bezeichneten Meßgrößen Massendurchflußrate, Dichte und/oder Viskosität aufweisen, die entsprechend kompensiert werden müssen, sei es unter Verwendung von im Meßsystems zusätzlich vorgesehener Sensorik und/oder von extern des Meßsystems zusätzlich ermittelter Meßwerte, um verläßlich auf eine zu alarmierenden Schädigung der Wandung schließen bzw. Fehlalarme sicher vermeiden zu können. In der JP-A 2009041924 und der US-A 45 46 649 wiederum sind jeweils basierend allein auf einer Messung und Auswertung der Dehnung der Wandung basierende Verfahren bzw. Meßanordnungen zur Ermittlung einer Schädigung der Wandung beschrieben.

Dem Rechnung tragend besteht eine Aufgabe der Erfindung darin, ein Verfahren bzw. ein entsprechendes Meßsystem anzugeben, mittels dem auch ohne Verwendung von Vibrationen der jeweiligen Wandung repräsentierenden Schwingungssignalen die Wandung eines Druckgeräts der in Rede stehenden Art, mithin auch eines Druckgeräts ohne Meßwandler vom Vibrationstyp, auf allfällige Schädigungen - bzw. umgekehrt auf ihre strukturelle Integrität - hin untersucht werden kann, und mittels dem bereits auch geringfügige strukturelle Veränderungen der jeweiligen Wandung, z.B. eine Verringerung der Wandstärke infolge Verschleißes oder eine plastische Verformung der Wandung, verläßlich erkannt bzw. sehr frühzeitig vermeldet werden können.

Zur Lösung der Aufgabe besteht die Erfindung in einem Verfahren gemäß Anspruch 1 zur Überwachung und/oder Überprüfung eines ein von einer, beispielsweise metallischen, Wandung umhülltes Lumen aufweisenden Druckgeräts, nämlich eines Geräts zum Führen und/oder Vorhalten eines, beispielsweise nominell mit einem statischen Druck von mehr als 1 bar auf die Wandung einwirkenden, Fluids - beispielsweise eines Gases, einer Flüssigkeit oder einer fließfähigen Dispersion - in nämlichem Lumen Darüberhinaus besteht die Erfindung in einem zur Verwirklichung des erfindungsgemäßen Verfahrens geeigneten Meßsystem gemäß Anspruch 15.

Ein Grundgedanke der Erfindung besteht darin, Druckgeräte der in Rede stehenden Art dadurch auf ihre jeweilige strukturelle Intergrität hin zu überprüfen bzw. zu überwachen, daß von zumindest einem Wandsegment der jeweiligen das Fluid führende Lumen umhüllenden Wandung wiederkehrend jeweils eine Dehnung erfaßt wird. Basierend auf einer kontinuierlichen oder in vorgegebenen Zeitabständen wiederkehrenden - Beobachtung der wenigstens einen örtlich erfaßten Dehnung bzw. zeitlicher Verläufe nämlicher Dehnung, etwa basierend auf einem mittels eines am jeweiligen Wandsegment plazierten Dehnungssensors generierter Dehnungssignals und unter Verwendung einer mit nämlichem Dehnungssensor elektrisch gekoppelten Umformer-Elektronik, können sehr schnell allfällige Schädigungen der Wandung des Druckgeräts, sei es inform von durch Materialabtrag verursachten Verschleiß oder inform von allfälliger Überbeanspruchung geschuldeter plastischer Verformung, erkannt werden. Bei signifikanter, nämlich über einem vorgegebenen Toleranzmaß hinausgehender, mithin außerhalb eines vorgegebenen Toleranzbereichs liegender Abweichung der erfaßten Dehnung von einem dafür vorgegebenen Referenzwert kann so auf eine entsprechende Schädigung der Wandung geschlossen werden.

Ein solche Abweichung der Dehnungen kann unter Verwendung der vorgenannten Dehnungssignale zudem auch in einen einem Kennzahlwert für eine die momentane Schädigung der Wandung quantifizierende Schadenskennzahl entsprechenden Schadenswert überführt werden, beispielsweise durch Ermitteln eines oder mehrerer Parameterwerte für einen oder mehrere nämliches Dehnungssignal charakterisierende Signalparameter mittels der vorgenannten Umformer-Elektronik. Als Schadenswert kann z.B. eine absolute oder relative Abweichung der die jeweiligen Signalparameter momentan repräsentierende Parameterwerten von einem dafür vorab, beispielsweise für nämliches Druckgerät mit unversehrter Wandung oder für ein baugleiches anderes Druckgerät, ermittelten Referenzwert dienen.

In Kenntnis des Ausmaßes einer solchen Schädigung kann durch entsprechenden Abgleich mit für das Druckgerät vorab ermittelten Referenzdaten ferner auch festgestellt werden, ob ein Weiterbetrieb des Druckgeräts noch ohne weiteres, nicht zuletzt auch ohne daß eine Beeinträchtigung anderer Anlagenbereichen oder gar eine Gefährdung von Personen oder Umwelt zu besorgen wäre, möglich ist, bzw. kann in Auswertung wiederkehrender Beobachtungen eines zeitlichen Verlaufs der Schädigung auch eine Geschwindigkeit mit der die Schädigung zunimmt ermittelt werden, beispielsweise um basierend darauf eine dem jeweiligen Druckgerät voraussichtlich verbleibende Restlebensdauer abzuschätzen bzw. umgekehrt einen Zeitpunkt des Erreichens einer vorab für das Druckgerät festgelegten kritische Schädigung der Wandung zu prognostizieren, mithin sich anbahnende Gefährdungssituationen infolge einer verminderten Druckfestigkeit frühzeitig entdecken zu können.

Die Erfindung basiert dabei u.a. auf der Erkenntnis, daß die Wandung von Druckgeräten der in Rede stehenden Art im Laufe des Betriebs typischerweise ungleichmäßig geschädigt wird, derart, daß die Wandung solche Wandsegmente, die im Vergleich zu anderen Wandsegmenten erheblich schneller verschleißen bzw. im gleichen Beobachtungszeitraum stärker verschlissen erscheinen, als die der übrigen Wandung, mithin bei entsprechender Anordnung des Dehnungssensors und Definition des jeweiligen Referenzwertes allfällige Schädigungen der Wandung bzw. diese provozierenden Überbelastungen der Wandung, etwa infolge eines zu hohen Betriebsdrucks, erkannt werden können.

Die Erfindung sowie weitere vorteilhafte Ausgestaltungen und Zweckmäßigkeiten davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:

Fig. 1, 2   ein als ein In-Line-Meßgerät ausgebildetes Druckgerät in verschiedenen Ansichten;

Fig. 3   schematisch nach Art eines Blockschaltbildes eine Umformer-Elektronik mit daran angeschlossenen Dehnungssensoren zum Erfassen von Dehnungen einer Wandung eines Druckgeräts, insb. eines Druckgeräts gemäß den Fig. 1, 2;

Fig. 4a   schematisch eineneiner Wandung eines Druckgeräts, insb. eines Druckgeräts gemäß den Fig. 1, 2, angebrachten Dehnungssensor zum Erfassen einer Dehnung eines Wandsegments nämlicher Wandung;

Fig. 4b   qualitativ eine Abhängigkeit einer eine Schädigung der Wandung quantifizierende Schadenskennzahl von einem Ausmaß nämlicher Schädigung der Wandung; und

Fig. 5, 6   verschiedene weitere Varianten für eine Anordnung von zwei oder mehr Dehnungssensoren an einer Wandung eines Druckgeräts, insb. eines Druckgeräts gemäß den Fig. 1, 2.

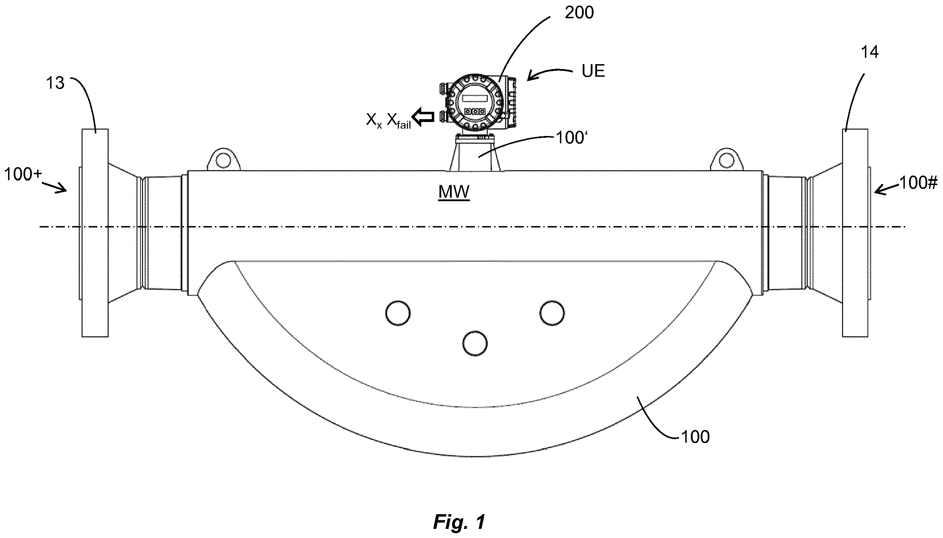

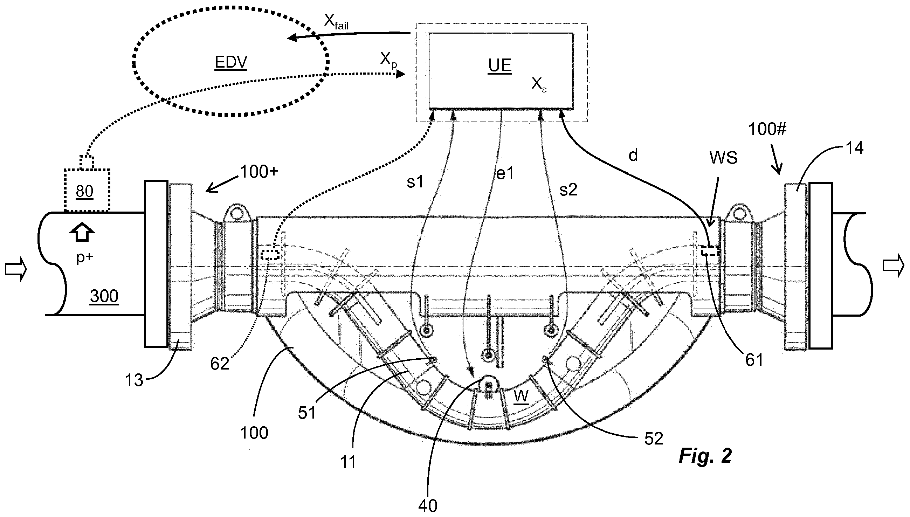

In Fig. 1 und 2 ist schematisch ein Ausführungsbeispiel für ein Druckgerät dargestellt. Das Druckgerät ist dafür vorgesehen, in einem von einer, beispielsweise metallischen, Wandung W umhüllten - hier sich von einem Einlaßende 100+ bis zu einem Auslaßende 100# erstreckenden - Lumen ein Fluid, beispielsweise ein Gas, ein Flüssigkeit oder eine fließfähige, nämlich mittels eines fluiden Dispersionsmedium, ggf. auch erst im Verlauf des Strömungspfades durch Kavitation oder Ausfällung gebildete Dispersion, wie z.B. ein Schaum, eine Suspension oder ein Aerosol, zu führen bzw. für einen gewissen Zeitraum vorzuhalten. Im besonderen ist das Druckgerät ferner dafür eingerichtet und ausgelegt, ein nominell mit einem statischen Druck von mehr als 1 bar, insb. auch mehr als 10 bar, auf die, beispielsweise aus einem rostfreien Edelstahl, einer Titan- und/oder einer Zirkonium-Legierung hergestellten, Wandung W einwirkenden Fluid im Lumen zu führen, mithin bei bestimmungsgemäßem Gebrauch statischen Drücken von mehr als 1 bar zumindest für eine vorgegebene nominelle Lebensdauer standhalten zu können. Das Druckgerät kann beispielsweise eine Rohrleitung, einen Tank, einen Kessel, insb. auch einen Dampfkessel, und/oder ein Meßrohr bzw. eine Meßkammer eines Meßgeräts, beispielsweise eines Durchfluß-Meßgeräts, umfassen.

Das hier stellvertretend gezeigte Druckgerät ist mittels eines als ein In-Line-Meßgerät, nämlich ein in den Verlauf einer Rohrleitung 300 einsetzbaren Meßsystem gebildet, das im Betrieb zumindest zeitweise von in der Rohrleitung geführtem Fluid durchströmt ist, derart, daß das Fluid am Einlaßende 100+ in das Lumen zunächst einströmen, in einer Strömungsrichtung weiter durch das Lumen hindurch und hernach am Auslaßende 100# aus dem Lumen wieder ausströmen gelassen wird. Nämliches Meßsystem, mithin das damit gebildete Druckgerät ist im besonderen dafür eingerichtet, wiederkehrend Meßwerte $X_x$ für wenigstens eine, beispielsweise fluiddynamische und/oder thermodynamische, Meßgröße x, wie etwa einer Volumendurchflußrate v, eine Massendurchflußrate m, einer Dichte p, einer Viskosität η, einem Druck p oder einer Temperatur ϑ, des jeweils hindurchströmen gelassenen Fluids zu ermitteln. Das Fluid führenden Lumen, mithin die dieses umgebende Wandung W, ist bei dem im Ausführungsbeispiel gezeigten, nämlich beispielsweise als Coriolis-Massendurchfluß-Meßgerät, Dichte-Meßgerät und/oder Viskositäts-Meßgerät ausgebildeten, Druckgerät mittels einer wenigstens ein - hier abschnittsweise gekrümmtes - Rohr 11 aufweisenden Rohranordnung des - hier dementsprechend als Meßwandler vom Vibrationstyp ausgestalteten - Meßwandlers MW gebildet. In vorteilhafter Weise ist die Rohranordnung, mithin das damit gebildet Druckgerät dahingehend optimiert, bei einem in Strömungsrichtung mit einer mittleren Strömungsgeschwindigkeit von 10 ms$^{-1}$ durch Lumen strömenden, eine Dichte von 1000 kg m$^{-3}$ bzw. eine Vikosität von 1 cP aufweisenden Fluid, beispielsweise also Wasser, vom Einlaßende 100+ bis zum Auslaßende 100# einen Druckverlust von weniger als 5 bar im hindurchströmenden Medium zu provozieren. Solche mittels eines Meßwandlers gebildeten Druckgeräte werden u.a. auch seitens der Anmelderin selbst, beispielsweise als nach dem Coriolisprinzip arbeitende Meßsysteme zur Messung von Massendurchflußraten unter der Typ-Bezeichnung "PROMASS A", "PROMASS E", "PROMASS F", "PROMASS H", "PROMASS I", "PROMASS O", "PROMASS P", "PROMASS S", "PROMASS X" (http://www.de.endress.com/#products/coriolis), angeboten.

Der Meßwandler dient hier u.a. dem Erfassen der wenigstens einen Meßgröße, derart, daß nämlicher Meßwandler in Wechselwirkung mit dem im Lumen geführten Fluid wenigstens ein von der wenigstens einen Meßgröße abhängiges, beispielsweise elektrisches, Meßsignal s1 generiert. Im Betrieb des hier gezeigten Meßsystems wird das wenigstens eine als Meßrohr dienende Rohr 11des Meßwandlers zwecks der Generierung des wenigstens einen Meßsignals mittels eines auf nämliches Rohr einwirkenden Schwingungserregers aktiv zu mechanischen Schwingungen angeregt, beispielsweise zu Biegeschwingungen um eine gedachte Schwingungsachse mit einer momentanen Resonanzfrequenz der Rohranordnung, und nämliche Schwingungen mittels wenigstens eines auf Bewegungen des wenigstens einen Rohrs 11 reagierenden Schwingungssensors in wenigstens ein als Meßsignal s1 für die Meßgröße dienendes Schwingungssignal mit wenigstens einem von der Meßgröße abhängigen Signalparameter, beispielsweise einer Signalamplitude, einer Signalfrequenz oder einem Phasenwinkel, gewandelt. Für den erwähnten Fall, daß es sich bei dem Meßsystem, mithin dem damit gebildeten Druckgerät um ein Coriolis-Massendurchfluß-Meßgerät handelt, weist der Meßwandler wenigstens zwei voneinander beabstandete Schwingungssensoren zum Erzeugen von zwei Schwingungssignalen s1, s2 mit jeweils einer von der Massendurchflußrate abhängigen Phasenwinkel.

Der hier gezeigte Meßwandler ist - wie bei marktgängigen, zumal für die industrielle Meß- und Automatisierungstechnik geeigneten Meßwandlern der in Rede stehenden Art, nicht zuletzt auch für Meßwandler vom Vibrationstyp, durchaus üblich - als vorkonfektionierte, mithin in den Verlauf der jeweiligen Rohrleitung direkt einsetzbare eigenständige Baueinheit mit einem jeweils ein- und auslaßseitig - hier nämlich im Bereich sowohl des Einlaßendes 100+ als auch des Auslaßendes 100# - mit der Rohranordnung mechanisch gekoppelten und nämliche Rohranordnung wie auch allfällig daran angebrachte Anbauteile, wie z.B. Schwingungssensoren bzw. Schwingungserreger, in einer, insb. nach gegenüber der umgebenden Atmosphäre hermetisch dichte, Kavität aufnehmenden Meßwandler-Gehäuse 100 realisiert. Für den für mittels eines In-Line-Meßgeräts gebildete Druckgeräte typischen Fall, daß das jeweilige Druckgerät wieder lösbar mit der Rohrleitung zu montieren ist, können, wie auch in Fig. 1 bzw. 2 angedeutet bzw. aus deren Zusammenschau ohne weiteres ersichtlich, einlaßseitig, nämlich im Bereich des Einlaßendes 100+ des Druckgeräts ein erster Anschlußflansch 13 für den Anschluß an ein Fluid zuführendes Leitungssegment der Rohrleitung und auslaßseitig, nämlich im Bereich des Auslaßendes 100# des Druckgeräts ein zweiter Anschlußflansch 14 für ein Fluid wieder abführendes Leitungssegment der Rohrleitung vorgesehen sein. Die Anschlußflansche 13, 14 können hierbei, wie bei solchen Druckgeräten, nicht zuletzt auch bei mittels eines Meßwandlers vom Vibrationstyp gebildeten Druckgeräten, durchaus üblich, endseitig in das Meßwandler-Gehäuse 100 integriert sein.

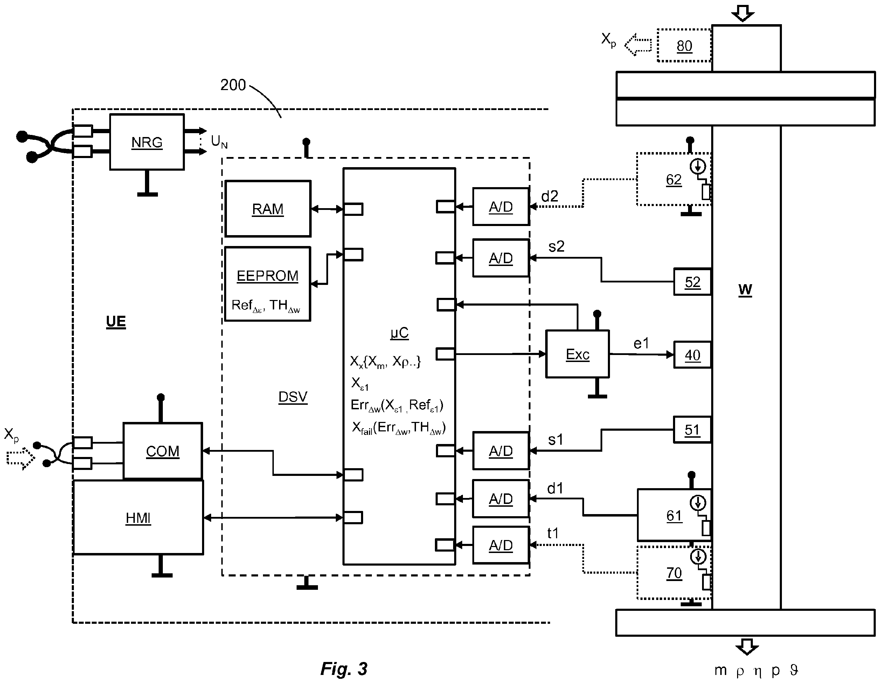

Zum Auswerten des wenigstens einen von der wenigsten einen Meßgröße abhängigen Meßsignals s1, nämlich zum Erzeugen von wenigstens einem die zu erfassenden Meßgröße repräsentierenden Meßwerts unter Verwendung des Meßsignals, sowie ggf. auch zum Ansteuern des Meßwandlers weist das Meßsystem, mithin das damit gebildet Druckgerät ferner eine mit dem Meßwandler MW elektrisch, beispielsweise auch via elektrische Anschlußleitung, gekoppelte, beispielsweise mittels eines oder mehrerer Mikroprozessoren gebildete, Umformer-Elektronik UE auf, von der in Fig. 3 schematisch nach Art eines Blockschaltbilds ein Ausführungsbeispiel gezeigt ist. Das elektrische Anschließen des Meßwandlers MW an die Umformer-Elektronik UE kann mittels entsprechender Anschlußleitungen erfolgen, die aus dem Elektronik-Gehäuse 200, beispielsweise mittels einer druck- und/oder explosionsfester Kabeldurchführung, heraus- bzw. in das Meßwandler-Gehäuse 100 hineingeführt sind. Die Umformer Elektronik UE kann, wie in Fig. 1 bzw. Fig. 3 schematisch angedeutet und wie bei Meßsystemen der in Rede stehenden Art durchaus üblich, in einem schlag- und/oder druckfesten, beispielsweise auch explosionsfesten, Elektronik-Gehäuse 200, das, wie beispielsweise auch in der eingangs erwähnten US-A 2011/0265580 oder US-A 2012/0123705 gezeigt, unter Bildung eines In-Line-Meßgeräts in Kompaktbauweise direkt am Meßwandler-Gehäuse 100, beispielsweise an einem entsprechenden, ggf. auch die vorgenannte Kabeldurchführung aufnehmenden, Haltestutzen 100' des Meßwandler-Gehäuses 100, gehaltert sein kann. Die, beispielsweise im Betrieb von extern via Anschlußkabel und/oder mittels interner Energiespeicher mit elektrischer Energie versorgte, Umformer-Elektronik UE kann zudem, wie bei solchen Meßsystemen der industriellen Meß- und Automatisierungstechnik durchaus üblich, über entsprechende elektrische Leitungen und/oder drahtlos per Funk mit einem von der Umformer-Elektronik UE räumlich entfernt angeordneten, ggf. auch räumlich verteilten, übergeordneten elektronischen Meßdatenverarbeitungssystem elektrisch verbunden sein, an das vom Meßsystem im Betrieb für die jeweilige Meßgröße erzeugte Meßwerte mittels eines diese entsprechend tragenden Meßwertesignals zeitnah weitergegeben werden, beispielsweise auch in Echtzeit.

Die mit dem Meßwandler UE im Betrieb kommunizierende, nämlich dessen Meßsignale s1, s2 empfangende und hier zudem auch via Treibersignal e1 den Meßwandler MW ansteuernde, Umformer-Elektronik UE erzeugt im hier gezeigten Ausführungsbeispiel unter Verwendung des wenigstens einen Meßsignals s1 wiederholt wenigstens einen die wenigstens eine Meßgröße x momentan repräsentierenden Meßwert, beispielsweise also einen Massendurchfluß-Meßwert $X_m$, einen Volumendurchfluß-Meßwert $X_v$, einen Dichte-Meßwert $X_\rho$, und/oder einen Viskositäts-Meßwert $X_\eta$. Dafür weist die Umformer-Elektronik UE, wie auch in Fig. 3 schematisch dargestellt, eine dem Ansteuern des - hier als Meßwandler vom Vibrationstyp ausgebildeten - Meßwandlers dienende Treiber-Schaltung Exc sowie eine Meßsignale s1, s2, des Meßwandlers MW verarbeitende, beispielsweise im Betrieb mit der Treiber-Schaltung Exc direkt kommunizierende, Meß- und Auswerte-Schaltung DSV auf, die im Betrieb die wenigstens eine Meßgröße x repräsentierende Meßwerte $X_x$ liefert. Jedes der vom Meßwandler MW gelieferten Meßsignale $s_1$, $s_2$ ist im hier gezeigten Ausführungsbeispiel der, beispielsweise mittels eines Mikroprozessors µC und/oder mittels eines digitalen Signalprozessors (DSP) sowie mittels entsprechender Analog-zu-Digital-Wandler A/D zum Digitalisieren der Meßsignale, entsprechender nicht-flüchtiger Speicher EEPROM zum persistenten Speichern von Ablaufprogrammen für den Mikroprozessor und/oder von Meß- und Betriebsdaten des Meßsystems sowie entsprechender flüchtiger Speicher RAM zum Speichern auszuführender Programm-Codes und/oder digitalen Meßwerten, realisierten, Meß- und Auswerteschaltung DSV über einen separaten, hier mittels jeweils eines zugeordneten Analog-zu-Digital-Wandler A/D zugeführt.

Im hier gezeigten Ausführungsbeispiel dient die Meß- und Auswerteschaltung µC der Umformer-Elektronik UE u.a. auch dazu, unter Verwendung der vom Meßwandler MW gelieferten Meßsignale $s_1$, $s_2$, beispielsweise anhand einer zwischen den Meßsignalen $s_1$, $s_2$ detektierten Phasendifferenz, wiederkehrend einen Massendurchfluß-Meßwert $X_m$ zu ermitteln, der eine Massendurchflußrate des im Meßwandler strömenden Fluids repräsentiert. Alternativ oder in Ergänzung zur Ermittlung des Massendurchfluß-Meßwert $X_m$ kann die Umformer-Elektronik UE des hier gezeigten Meßsystems auch dazu dienen, abgleitet von einer anhand der Meßsignale s1, s2 oder beispielsweis auch des Errgersignals e1 ermittelten momentanen Schwingungsfrequenz des vibrieren gelassenen Rohrs 11 einen Dichte-Meßwert zu erzeugen, der eine Dichte des im Meßwandler strömenden Fluids repräsentiert. Ferner kann die Umformer-Elektronik UE wie bei derartigen Meßsystemen durchaus üblich ggf. auch dazu verwendet werden, einen eine Viskosität des im Meßwandler strömenden Fluids repräsentierenden Viskositäts-Meßwert $X_\eta$ zu ermitteln, vgl. hierzu auch die eingangs erwähnten US-A57 96 011, US-B 72 84 449, US-B 70 17 424, US-B 69 10 366, US-B 68 40 109, US-A 55 76 500, oder US-B 66 51 513. Zur Ermittlung der zum Bestimmen der Viskosität erforderlichen Erregerenergie oder Erregerleistung bzw. Dämpfung eignet sich dabei beispielsweise das von Treiberschaltung der Umformer-Elektronik gelieferte Erregersignal und/oder auch ein dem Einstellen des Treibersignals dienendes internes Steuersignal der Umformer-Elektronik.

Zum Visualisieren von Meßsystem intern erzeugten Meßwerten $X_x$ und/oder gegebenenfalls Meßsystem intern generierten Statusmeldungen, wie etwa einer Fehlermeldung und/oder einem Alarm, vor Ort kann das Meßsystem desweiteren ein mit der Umformer-Elektronik UE kommunizierendes Anzeige- und Bedienelement HMI aufweisen, wie etwa ein im Elektronikgehäuse 200 hinter einem darin entsprechend vorgesehenen Fenster plaziertes LCD-, OLED- oder TFT-Display zuzüglich einer entsprechende Eingabetastatur und/oder ein Touchscreen. Darüberhinaus sind in der, beispielsweise auch re-programmierbaren und/oder fernparametrierbaren, Umformer-Elektronik UE weitere, dem Betrieb des Meßsystems dienende Elektronik-Komponenten vorgesehen, wie etwa eine, beispielsweise mittels eines Schaltnetzteils gebildete, interne Energieversorgungsschaltung NRG zum Bereitstellen interner Versorgungsspannungen $U_N$ oder auch eine dem Anschluß an ein übergeordnetes Meßdatenverarbeitungssystem und/oder einen Feldbus dienende Kommunikationsschaltung COM. In vorteilhafter Weise kann nämliche Kommunikationsschaltung COM beispielsweise auch dafür eingerichtet sein, daß die damit gebildete Umformer-Elektronik UE im Betrieb mit einem diesem übergeordneten elektronischen Meßdatenverarbeitungssystem, beispielsweise einer speicherprogrammierbaren Steuerung (SPS), einem Personalcomputer und/oder einem Prozeß-Leitsystem, über ein innerhalb des übergeordneten Datenverarbeitungssystems vorgesehenen - leitungsgebundenen und/oder funkbasierten - Datenübertragungsnetzwerk, beispielsweise einem Feldbus und/oder industriellen Funknetz-, Meß- und/oder andere Betriebsdaten austauschen kann, wie etwa aktuelle Meßwerte oder der Steuerung des Meßsystems dienende Einstell- und/oder Diagnosewerte. Zudem kann die beispielsweise auch die interne Energieversorgungsschaltung NRG im Betrieb von einer im Datenverarbeitungssystem vorgesehen externen Energieversorgung gespeist werden.

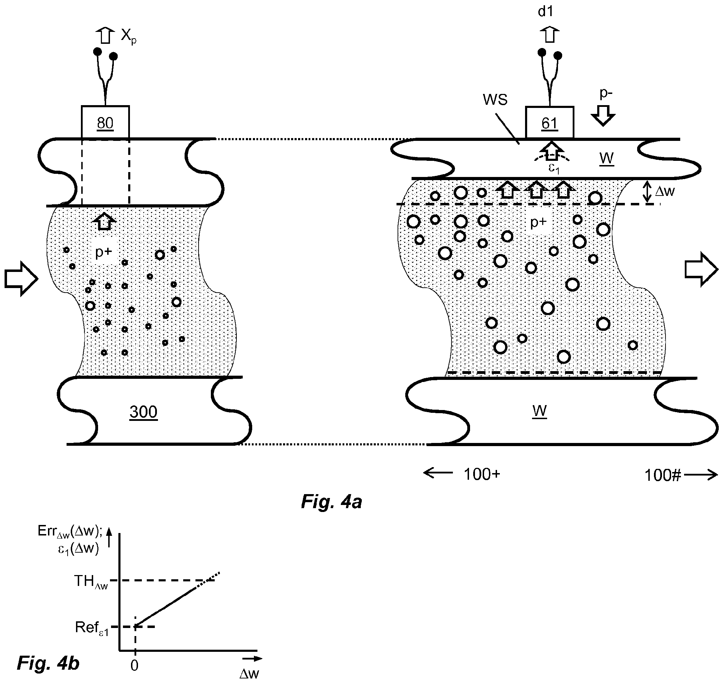

Wie bereits erwähnt können die Wandungen von Druckgeräten der in Rede stehenden Art infolge von Überbelastungen, sei es durch Betreiben des jeweiligen Druckgeräts mit über vorab vereinbarte Grenzwerte hinausgehenden Prozeßparametern - wie etwa einem zu hohen Betriebsdruck, einer zu hohen Betriebstemperatur und/oder einer zu hohen Strömungsgeschwindigkeit - oder auch durch Beaufschlagen mit einem für das Druckgerät ungeeigneten - beispielsweise einem die Wandung abschleifenden und/oder die Wandung chemisch angreifenden - Fluid, zumindest partiell in erheblichem Maße beschädigt werden; dies unter Umständen auch derart, daß das jeweilige Druckgerät - etwa infolge einer plastischen Verformung der Wandung und/oder, wie auch in Fig. 4a schematisch dargestellt, infolge eines Verschleißes $\Delta w$ der Wandung, nämlich eines Materialabtrags aus deren dem Lumen zugewandten Oberfläche, einhergehend mit einer Verringerung einer Wandstärke der Wandung - nur noch eine verminderte Druckfestigkeit bzw., im Falle, daß das Druckgerät als Meßsystem ausgestaltet ist, nur noch eine verminderte Meßgenauigkeit aufweist.

Um möglichst frühzeitig eine derartige Schädigung der Wandung W detektieren zu können, beispielsweise auch bereits in einem Anfangsstadium, nämlich bevor die Schädigung als für das Druckgerät hinsichtlich seiner (noch verbliebenen) Druckfestigkeit oder ggf. hinsichtlich seiner (noch verbliebenen) Meßgenauigkeit als kritisch einzustufen ist, ist das Meßsystem, mithin das damit gebildete Druckgerät im besonderen auch dafür eingerichtet, eine Dehnung $\varepsilon_1$ der Wandung - im hier gezeigten Ausführungsbeispiel nämlich eine lokale Dehnung eines Wandsegment des Rohrs 11 - zu erfassen und basierend darauf einen nämliche Dehnung der Wandung, beispielsweise auch im zeitlichen Mittel, repräsentierenden Dehnungswert $X_{\varepsilon 1}$ zu ermitteln. Unter Ausnutzung einer der Wandung naturgemäß innewohnenden Abhängigkeit der Dehnung $\varepsilon_1$ vom Ausmaß der Schädigung der Wandung, im Falle eines Verschleißes $\Delta w$ nämlich beispielsweise derart, daß bei Beaufschlagung der Wandung mit einem gleichbleibenden bzw. wiederkehrend gleichen Druck, wie auch in Fig. 4b exemplarisch gezeigt, nämliche Dehnung $\varepsilon_1$ mit zunehmendem Verschleiß $\Delta w$ ansteigt, ist das Meßsystem zudem dafür eingerichtet, die Schädigung der Wandung unter Verwendung des Dehnungswerts $X_{\varepsilon 1}$ zu ermitteln; dies z.B. in der Weise, daß anhand eines in einem Beobachtungszeitraum festgestellten Anstiegs des Dehnungswerts $X_{\varepsilon 1}$ und/oder durch Ermitteln bzw. Quantifizieren einer Abweichung des Dehnungswerts $X_\varepsilon$ von einem oder mehreren vorgegebenen Referenzwerten, wie etwa einem eine unversehrte Wandung repräsentierenden Sollwert und/oder einem eine unzulässig hohe bzw. zu einer kritischen Schädigung führende Dehnung repräsentierenden Schwellenwert, auf eine entsprechende Schädigung der Wandung geschlossen wird. Ein solcher Referenzwert kann z.B. bei einer für das Druckgerät im Herstellerwerk vorgenommenen Kalibriermessung und/oder bei Inbetriebnahme vor Ort ermittelt und hernach in der Umformer-Elektronik UE abgespeichert werden, beispielsweise im erwähnten nicht-flüchtigen Speicher EEPROM der Meß- und Auswerteschaltung DSV; alternativ oder in Ergänzung kann ein solcher Referenzwert aber auch für ein bau- oder zumindest typgleiches anderes Druckgerät, beispielsweise im Herstellerwerk, ermittelt und hernach entsprechend an die Umformer-Elektronik bzw. die Umformer-Elektroniken anderer typ- oder baugleicher Druckgeräte übertragen werden.

Gemäß einer anderen Ausgestaltung der Erfindung ist ferner vorgesehen, basierend auf der ermittelten Schädigung, nämlich für den Fall, daß die Schädigung ein für das Druckgerät vorgegebenes kritisches Maß übersteigt, eine entsprechende, nämlich eine kritische Schädigung der Wandung, beispielsweise auch visuell und/oder akustisch wahrnehmbar, signalisierende Warnmeldung $X_{fail}$ zu generieren. Kritische Schädigung kann beispielsweise eine einer für das Druckgerät vorab festgelegte maximal zulässigen Schädigung der Wandung entsprechende Schädigung und/oder eine eine Inspektion des Druckgeräts bedingende Schädigung sein. Die Warnmeldung $X_{fail}$ kann im hier gezeigten Ausführungsbeispiel mittels der Meß- und Auswerteschaltung DSV erzeugt und via Anzeige- und Bedienelement HMI und/oder via Kommunikationsschaltung COM ausgegeben werden.

Zum Erfassen der Dehnung $\varepsilon_1$ der Wandung umfaßt das Meßsystem gemäß einer Ausgestaltung der Erfindung ferner einen an einem Wandsegment WS der Wandung W fixierten - beispielsweise mittels eines resistiven oder piezoresistiven Dehnmeßstreifen (DMS) gebildeten - Dehnungssensor 61 zum Erzeugen eines von der Dehnung nämlichen Wandsegments WS abhängigen Dehnungssignals d1. Dehnungssignal d1 kann hierbei z.B. ein (zunächst) analoges elektrisches Signal mit einer von der jeweils zu erfassenden Dehnung abhängigen elektrischen Spannung und/oder einem von nämlicher Dehnung abhängigen elektrischen Strom sein. Der Dehnungssensor kann beispielsweise mittels eines von außen, nämlich auf einer dem Lumen abgewandten, mithin nicht vom darin geführten Fluid kontaktierten Oberfläche auf das Wandsegment WS aufgeklebten Dehnmeßstreifen (DMS), jeweils mit einem vorgegebene nominellen Widerstandswert $R_0$ (Nennwiderstand), beispielsweise von 500 $\Omega$ (Ohm), und einer vorgegeben Empfindlichkeit k (k-Faktor), beispielsweise von 100, gebildet sein. Der den Dehnungssensor 61 bildende, ggf. auch unter Vorspannung gehaltene, Dehnmeßstreifen kann in vorteilhafter Weise ferner z.B. so angeordnet sein, daß dieser vorwiegend eine azimutale, nämlich einer Umfangsänderung entsprechende bzw. in einer Umfangsrichtung orientierte Dehnung des Wandsegments WS erfaßt; alternativ dazu kann der Dehnmeßstreifen aber auch so angeordnet sein, daß damit vorwiegend eine axiale, nämlich in einer Längsrichtung des von der Wandung umhüllten Lumens - im hier gezeigten Ausführungsbeispiel also auch in der Strömungsrichtung - orientierte Dehnung erfaßt wird. Zum Erzeugen des Dehnungssignals d1 kann der Dehnmeßstreifen (DMS) im Betrieb von einem von einer, beispielsweise im jeweiligen Dehnungssensor vorgesehenen, Konstantstromquelle getriebenen eingeprägten, mithin bekannten elektrischen Strom $I_{DMS}$ durchflossen sein, derart, daß eine über dem Dehnmeßstreifen abfallende elektrische Spannung $U_{DMS1}$ als Dehnungssignal d1 dient. In Kenntnis der einem solchen Dehnungssensor jeweils innewohnenden Abhängigkeit $U_{DMS1} = I_{DMS} \cdot R_0 (1 + k \cdot \varepsilon_1)$ der jeweiligen momentanen Spannung $U_{DMS1}$ von der jeweiligen momentan erfaßten Dehnung $\varepsilon_1$ kann hernach die jeweilige Dehnung ohne weiteres auch numerisch ermittelt, mithin quantifiziert werden. Der Dehnungssensor 61 ist, wie auch in Fig. 2 oder 3 schematisch dargestellt bzw. aus deren Zusammenschau ohne weiteres ersichtlich, mit der Umformer-Elektronik UE, hier nämlich mit deren Meß- und Auswerteschaltung DSV, auch über einen der Wandlung des Dehnungssignals d1 in eine als digitales Dehnungssignal dienende Abtastfolge dienenden Analog-zu-Digital-Wandler A/D elektrisch gekoppelt. Der Dehnungswert $X_{\varepsilon 1}$ kann basierend auf dem Dehnungssignal d1 beispielsweise dadurch ermittelt werden, daß mittels der Meß- und Auswerteschaltung DSV vom Dehnungssignal d1 wenigstens ein Parametermeßwert für einen nämliches Dehnungssignal charakterisierenden, nicht zuletzt aber auch mit der naturgemäß zeitlich veränderlichen Dehnung $\varepsilon_1$ möglichst gut korrelierten Signalparameter, beispielsweise also ein Momentanwert des Dehnungssignals, ermittelt wird. Als Signalparameter können anstelle des Momentanwerts hierbei aber auch andere Lageparameter, wie z.B. ein Effektivwert (RMS), und/oder auch Streuungsparameter, wie z.B. eine Varianz des Dehnungssignals dienen. Demnach ist die Meß- und Auswerteschaltung DSV gemäß einer weiteren Ausgestaltung zudem dafür eingerichtet, den Dehnungswert $X_{\varepsilon 1}$ basierend auf dem Dehnungssignal d1, insb. mittels der daraus gewonnenen Abtastfolge, zu ermittelnbzw. nämlichen Dehnungswert $X_{\varepsilon 1}$ als ein die Dehnung $\varepsilon_1$ digital repräsentierenden Meßwert zu generieren. Es kann hierbei, nicht zuletzt auch für den Fall, daß die Wandung im Betrieb nennenswerten, nämlich die vom jeweiligen Dehnungssensor gelieferten Dehnungssignal nicht mehr vernachlässigbar beeinflussenden Temperaturen bzw. zeitlichen Änderungen derselben ausgesetzt ist, zudem von Vorteil sein, insb. für den Fall, das der Dehnungssensor 61 selbst nicht temperaturkompensiert sind, zusätzlich auch eine Temperatur der Wandung, etwa in unmittelbarer Nähe des Wandsegments WS1, zu erfassen, beispielsweise mittels eines ein einer dem Lumen abgewandten Seite der Wandung W aufgeklebten Platin-Widerstand und/oder Thermoelement aufweisenden und ein entsprechendes Temperatursignal t1 an die Meß- und Auswerteschaltung DSV liefernden Temperatursensors 70, und die Schädigung der Wandung auch unter Verwendung des Temperatursignals t1 zu ermitteln, beispielsweise indem die Meß- und Auswerteschaltung DSV allfällige Temperaturabhängigkeiten des Dehnungssignals d1 basierend auf dem Temperatursignal t1 kompensiert bzw. bei der Ermittlung des Dehnungswert $X_{\varepsilon 1}$ entsprechend berücksichtigt.

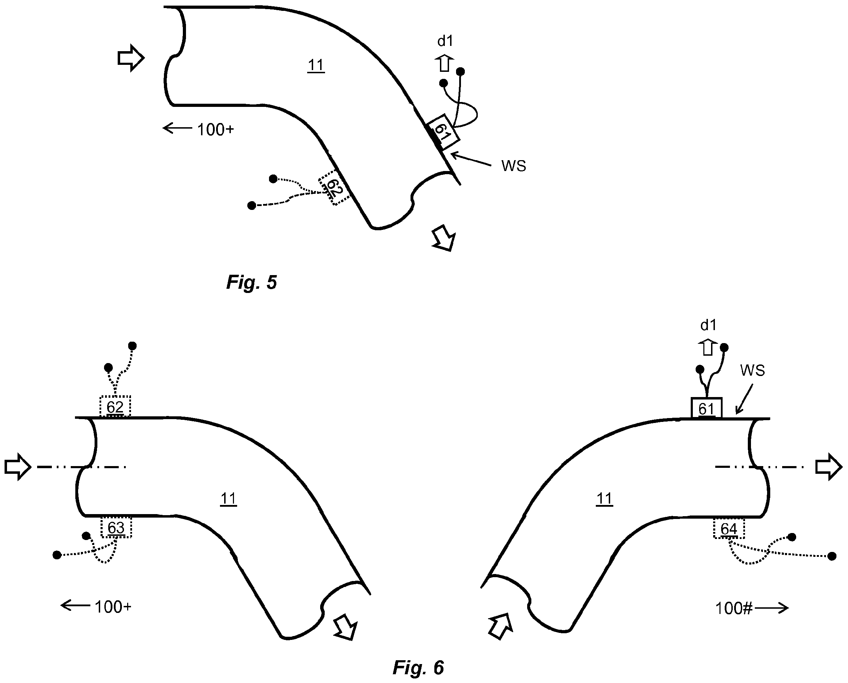

Grundsätzlich gibt es bei Druckgeräten der in Rede stehenden Art eine Vielzahl von Möglichkeiten, den Dehnungssensor 61 zu plazieren, mithin das hinsichtlich seiner Dehnung zu beobachtende Wandsegment WS entsprechend auszuwählen. Für die Überwachung des jeweiligen Druckgeräts sind, wie bereits erwähnt, beispielsweise solche Wandsegmente gut geeignet, die auf für das jeweilige Druckgerät typische Belastungsszenarien regelmäßig mit einer signifikanten lokalen Schädigungen reagieren, beispielsweise derart, daß das ausgewählte Wandsegmente im Falle einer Schädigung der Wandung innerhalb eines vorgebbaren Beobachtungszeitraums stets schneller geschädigt wird als andere Wandsegmente bzw. zu einem vorgebbaren Beobachtungszeitpunkt stärker geschädigt ist als andere Wandsegmente der Wandung. Voneinander abweichende lokalen Schädigungen von Druckgeräten der in Rede stehenden Art können beispielsweise Schädigungen einzelner Wandsegmente mit voneinander verschiedenen Schadensbildern und/oder voneinander abweichenden Schädigungsgraden sein. Für die Überwachung der Wandung geeignete Wandsegmente können bei Druckgeräten mit betriebsgemäß von Fluid durchströmtem Lumen beispielweise solche Wandsegmente sein, die, wie in Fig. 5 bzw. 6 schematisch angedeutet, unmittelbar an ein bogenförmiges Segment der jeweiligen Rohranordnung oder einen damit gebildeten Krümmer angrenzen. Eine solche Anordnung des Dehnungssensors 61 ist nicht zuletzt auch für solche Belastungsszenarien gut geeignet, in denen ein erhöhter Verschleiß der Wandung infolge eines partiellen Abschleifens der Wandung durch eine zumindest gelegentlich im Lumen des Druckgeräts strömende Dispersion und/oder in denen plastische Verformungen der Wandungen zu besorgen sind. So neigen beispielsweise Dispersionen nämlich dazu, eine im jeweiligen Dispersionsmedium mitgeführte disperse Phase, beispielsweise also in einem Gas mitgeführte Feststoffpartikel oder, wie in Fig. 4a schematisch dargestellt, in einer Flüssigkeit mitgeführte Gasblasen, im Verlauf der jeweiligen Strömung gelegentlich innerhalb bestimmter Bereiche verstärkt anzusammeln bzw. die Konzentration partiell zu erhöhen, etwa auch durch Kavitation, Sedimentation oder Ausfällung; dies im besonderen auch derart, daß - wie auch in Fig. 4a schematisiert dargestellt - mit einer gewissen Regelmäßigkeit einige der Wandsegmente der Wandung - in Fig. 4a nämlich auch das Wandsegment WS - vornehmlich vom Dispersionsmedium kontaktiert ist, während andere Wandsegmente häufiger bzw. in stärkerem Ausmaß mit der dispersen Phase beaufschlagt ist, mithin im Betrieb stärker geschädigt wird. Dieser Effekt ist im besonderen Maß auch bei in Rohranordnungen mit abschnittsweise gekrümmten Rohren und/oder bei in abrupten Querschnittsveränderungen, beispielsweise inform eines Diffusors, aufweisende Rohranordnungen strömenden Dispersionen zu beobachten.

Wenngleich die Überwachung der Wandung des Druckgeräts durch Erfassen der Dehnung lediglich des Wandsegments WS bzw. unter Verwendung von lediglich einem entsprechend plazierten Dehnungssensor 61 für die meisten Anwendungsfällen mit ausreichender Genauigkeit bzw. Sicherheit realisiert werden kann, kann es gelegentlich dennoch von Vorteil bzw. sogar erforderlich sein, beispielsweise um den Grad der jeweiligen Schädigung feiner gestuft detektieren zu können bzw. um einzelne Schadensbilder voneinander separiert erfassen und gesondert bewerten zu können oder um eine über einen größeren räumlichen Bereich gemittelte Dehnung zu erfassen, die Dehnung von insgesamt zwei oder mehr, selbstredend voneinander beabstandeten Wandsegmenten zu erfassen, nämlich mittels weiterer entsprechend plazierter Dehnungssensoren 62, 63 bzw. 64, und mittels der jeweiligen Meß- und Auswerteschaltung DSV entsprechend auszuwerten. Die Dehnungssensoren, mithin die entsprechenden Wandsegmente können hierfür z.B. in der in Fig.5 bzw. 6 stellvertretend gezeigten Weise angeordnet sein. Insbesondere kann es hierbei von Vorteil sein, die Dehnungssensoren 61 und 62 so anzuordnen, daß das mittels des Dehnungssensors 61 hinsichtlich der Dehnung zu beobachtende Wandsegment WS im Vergleich zu dem mittels des Dehnungssensors 62 hinsichtlich der Dehnung zu beobachtende Wandsegment schneller verschleißt und/oder nach einer entsprechenden Belastung stärker verschlissen ist. Darüberhinaus ist zudem auch möglich, anstelle der in den Fig. 5 bzw. 6 gezeigten Konstellationen, in denen also die Rohranordnung jedes der Wandsegmente, von denen zwecks Ermittlung einer Schädigung der Wandung W eine jeweilige Dehnung erfaßt wird, inkludiert, zumindest eines der hinsichtlich der Dehnung zu beobachtenden Wandsegmente außerhalb der Rohranordnung zu verorten, beispielsweise indem der entsprechende Dehnungssensor außen an einer Rohrwand eines Fluid dem Meßwandler zuführenden oder eines Fluid vom Meßwandler abführenden Leitungssegment der angeschlossenen Rohrleitung angebracht ist.

Nach einer weiteren Ausgestaltung der Erfindung ist ferner vorgesehen, die Schädigung der Wandung quantitativ zu ermitteln, indem basierend auf dem Dehnungssignal d1 bzw. dem Dehnungswert $X_{\varepsilon 1}$ sowie basierend auf dem auf einem entsprechend vorgegebenen, beispielsweise in der Umformer-Elektronik UE vorab hinterlegten, Referenzwert $Ref_{\varepsilon 1}$ ein Schadenswert $Err_{\Delta W}$, nämlich ein Kennzahlwert für eine die Schädigung der Wandung quantifizierende Schadenskennzahl ermittelt wird. Die Schadenskennzahl kann z.B. als eine - absolute oder relative - Abweichung des Dehnungswert $X_{\varepsilon 1}$ von einem dafür entsprechend vorab ermittelten, Druckgerät spezifischen Referenzwert $Ref_{\Delta \varepsilon}$ definiert sein. In vorteilhafter Weise kann die Schadenskennzahl dabei z.B. so definiert sein, daß, wie auch in Fig. 4b vereinfacht dargestellt, der Schadenswert $Err_{\Delta W}$ mit zunehmender Schädigung gleichfalls zunimmt. Nämlicher Referenzwert $Ref_{\Delta \varepsilon}$ kann z.B. einer Dehnung der unversehrten Wandung des Druckgeräts bzw. eines intakten Wandsegments davon entsprechen. Demnach kann der Referenzwert $Ref_{\Delta \varepsilon}$ für das jeweilige Druckgerät beispielsweise basierend auf dem während einer für nämliches Druckgerät im Herstellerwerk bei Nenndruck vorgenommenen und/oder bei Inbetriebnahme vor Ort bei vorgegebenem oder bekanntem Betriebsdruck durchgeführten Kalibriermessung generierten Dehnungssignal d1 ermittelt werden. Alternativ oder in Ergänzung kann nämlicher Referenzwert $Ref_{\Delta \varepsilon}$ beispielsweise aber auch basierend auf einer für ein baugleiches anderes Druckgerät mit unversehrter Wandung ermittelten Dehnung vorab berechnet oder basierend auch einer innerhalb der mittels des Druckgerät gebildeten Anlage durchgeführten Druckmessung ermittelt worden sein. Für den erwähnten Fall, daß zusätzlich zum Dehnungssensor 61 wenigstens ein weiterer, nämlich davon beabstandeter Dehnungssensor 62 zur Erfassung einer örtlicher Dehnungen der Wandung W des Druckgeräts vorgesehen sind, kann der vorbezeichnete Referenzwert $Ref_{\varepsilon 1}$ zudem auch basierend auf einem mittels nämlichen Dehnungssensors 62 generierten, beispielsweise an die Meß- und Auswerteschaltung DSV gelieferten, Dehnungssignal berechnet werden bzw. kann ein von nämlichem Dehnungssignal entsprechend abgeleiteter, zusätzlich zum Dehnungswert $X_{\varepsilon 1}$ ermittelter weiterer Dehnungswert $X_{\varepsilon 2}$ als Referenzwert $Ref_{\varepsilon 1}$ verwendet werden ($X_{\varepsilon 2} \rightarrow Ref_{\varepsilon 1}$).

Für den vorgenannten Fall, daß die Schadenskennzahl als eine relative Abweichung der Dehnung ε1 bzw. des diese repräsentierenden Dehnungswert $X_{\varepsilon 1}$ von dem dafür vorab ermittelten, Druckgerät spezifischen Referenzwert $Ref_{\varepsilon 1}$ definiert ist, kann der Schadenswert $Err_{\Delta W}$ mittels der der Meß- und Auswerteschaltung DSV beispielsweise so berechnet werden, mithin kann die Umformer-Elektronik ferner so eingerichtet sein, daß der jeweilige Schadenswert $Err_{\Delta W}$ die Bedingung:

$$Err_{\Delta W} = 1 - \frac{X_{\varepsilon 1}}{Ref_{\varepsilon 1}}$$

erfüllt. Alternativ oder in Ergänzung kann der Schadenswert $Err_{\Delta w}$ mittels der der Meß- und Auswerteschaltung DSV aber auch so berechnet werden, mithin kann die Umformer-Elektronik UE ferner auch so eingerichtet sein, daß der Schadenswert $Err_{\Delta w}$ die Bedingung:

$$Err_{\Delta w} = Ref_{\varepsilon 1} - X_{\varepsilon 1}$$

erfüllt, mithin einer absoluten Abweichung des Dehnungswerts $X_{\varepsilon 1}$ vom zugehörigen Referenzwert $Ref_{\varepsilon 1}$ entspricht. Der Schadenswert $Err_{\Delta w}$ kann im weiteren auch dafür verwendet werden, zu ermitteln, ob eine Schädigung der Wandung bereits stattgefunden hat (oder ob nicht) bzw. auch zu ermitteln, welches Ausmaß eine allfällige Schädigung inzwischen angenommen hat. Zudem kann mittels des jeweils aktuellen Schadenswert $Err_{\Delta w}$ ferner auch festgestellt werden, ob die Schädigung der Wandung bereits der für das jeweilige Druckgerät vorab festgelegten kritischen Schädigung der Wandung entspricht, beispielsweise indem der jeweilige Schadenswert $Err_{\Delta w}$ mit einem dafür entsprechend vorgegebenen, nämliche kritische Schädigung repräsentierenden Schwellenwert $TH_{\Delta w}$ verglichen wird, beispielsweise auch direkt in der Meß- und Auswerteschaltung DSV. Nämlicher Schwellenwert $TH_{\Delta w}$ kann beispielsweise vorab mittels eines typ- oder baugleichen anderen Druckgerät, das aber bereits eine als kritische Schädigung einzustufende Schädigung aufweist, ermittelt werden, indem mittels dessen Meß- und Auswerteschaltung wenigstens ein dessen momentane Schädigung repräsentierender Schadenswert $Err_{\Delta w}$ ermittelt, insb. auch abgespeichert, wird, und hernach als Schwellenwert $TH_{\Delta \varepsilon}$ in der Meß- und Auswerteschaltung DSV des zu überwachenden Druckgeräts entsprechend hinterlegt wird, beispielsweise auch im erwähnten nicht-flüchtigen Speicher EEPROM. Sofern ein Über- bzw. Unterschreiten des Schwellenwerts $TH_{\Delta w}$ durch den Schadenswert $Err_{\Delta w}$ erkannt wird, kann dies entsprechend, nämlich beispielsweise inform der erwähnten Warnmeldung $X_{fail}$ signalisiert werden.

Die für die Ermittlung der Schädigung der Wandung erforderliche Dehnung des Wandsegments WS kann z.B. dadurch bewirkt werden, daß im Betrieb des Druckgeräts eine zwischen einem innerhalb des Lumens herrschenden statischen Innendruck p+ und einem von außen auf die Wandung wirkenden Umgebungsdruck p- existierenden Druckdifferenz (Relativdruck $p_{rel}$) verändert wird, wodurch zumindest Teilbereiche der Wandung, nämlich zumindest das Wandsegment WS elastisch deformiert wird. Nachdem Druckgeräte der in Rede stehenden Art wie bereits mehrfach erwähnt, dafür eingerichtet sind, innerhalb des jeweiligen Lumens ein Fluid zu führen, das einen um mindestens 0.5 bar über dem Umgebungsdruck p-liegenden Druckwert p+aufweist, kann ohne weiteres davon ausgegangen werden, daß im Betrieb des jeweiligen Druckgeräts regelmäßig eine solche, nämlich für eine auf einer elastischen Verformung der Wandung basierende Ermittlung der Schädigung der Wandung ausreichende Druckdifferenz vorliegt; dies nicht zuletzt auch für den im Ausführungsbeispiel gezeigten Fall, daß das Druckgerät mittels wenigstens eines Meßrohrs zum Führen von strömendem Fluid gebildet ist. Bei von Fluid durchströmten Druckgerät kann zudem ohne weiteres davon ausgegangen werden, daß allein schon durch das betriebsgemäße Ein- bzw. wieder Ausströmenlassen des Fluids eine für die Detektion einer allfälligen Schädigung der Wandung ausreichende Erhöhung der Druckdifferenz zu verzeichnen ist, bzw. daß es zum Erhöhen des innerhalb des Lumens herrschenden statischen Innendrucks auf den höheren Druckwert in der Regel ausreicht, Fluid mit dem nominellen Betriebsdruck durch das Lumen des Druckgeräts strömen zu lassen. Wie bereits angedeutet, liegen nämlich typischerweise die Druckwerte für den Innendruck p+ bei Druckgeräten der in Rede stehenden Art, nicht zuletzt auch bei mittels wenigstens eines Meßrohrs zum Führen von strömendem Fluid gebildeten Druckgeräten, im normalen Betrieb zumindest zeitweise deutlich über 10 bar. Für den anderen erwähnten Fall, daß die Wandung des Druckgeräts eine plastische, mithin nicht reversiblen Verformung erfahren hat, enthalten die Dehnung $\varepsilon_1$ bzw. das diese repräsentierende Dehnungssignal d1 neben einer mit der der Druckdifferenz folgenden elastischen Verformung der Wandung korrespondierenden, mithin zeitlich schwankenden Komponente zudem jeweils auch eine von der momentanen Druckdifferenz weitgehend unabhängige, mithin nicht-flüchtige Komponente, deren Höhe einem Ausmaß der plastischen Verformung der Wandung zzgl. einer allfälligen Vorspannung des Dehnungssensors entspricht.

Nachdem zum einen die Dehnung $\varepsilon_1$ neben einer Abhängigkeit vom Ausmaß der Schädigung auch eine Abhängigkeit von dem auf die Wandung jeweils einwirkenden statischen Druck aufweist, zum anderen nämlicher Druck im zeitlichen Verlauf typischerweise auch erhebliche Schwankungen aufweisen kann, ist erfindungsgemäß ferner vorgesehen, nicht zuletzt auch um Fehlalarme gesichert vermeiden zu können, zusätzlich zum Dehnungswert $X_{\varepsilon 1}$ auch einen einen innerhalb des Lumens herrschenden statischen Innendruck repräsentierenden, beispielsweise im nicht-flüchtigen Speicher EEPROM und/oder im flüchtigen Speicher RAM vorgehaltenen, Druck-Meßwert $X_p$ zum Ermitteln der Schädigung der Wandung zu verwenden bzw. zu berücksichtigen. Nämlicher Druck-Meßwert $X_p$ kann bei dem hier gezeigten Meßsystem z.B. vom Anwender via Anzeige- und Bedienelement HMI vor Ort eingegeben und/oder im Betrieb des Meßsystems wiederkehrend via Kommunikationsschaltung COM an die Meß- und Auswerteschaltung DSV übermittelt werden. Die Umformer-Elektronik UE wiederum ist ferner dafür eingerichtet, beispielsweise durch entsprechende Programmierung der Meß- und Auswerteschaltung DSV, das Dehnungssignal d1 zusammen mit dem vorliegen Druck-Meßwert $X_p$ weiterzu-

verarbeiten, nämlich basierend auf dem Dehnungssignal d1 bzw. dem davon abgeleiteten digitalen Dehnungssignal zunächst den Dehnungswert $X_{\varepsilon 1}$ zu ermitteln und hernach die allfällig vorliegende Schädigung der Wandung unter Verwendung sowohl des Dehnungswerts $X_{\varepsilon 1}$ als auch des Druck-Meßwerts $X_p$ zu ermitteln. Zwecks einer auch bei über einen weiten Bereich schwankenden Druck präzisen bzw. verläßlichen Ermittlung der Schädigung der Wandung ist gemäß einer weiteren Ausgestaltung der Erfindung ferner vorgesehen, unter Verwendung des Druck-Meßwerts $X_p$ einen Dehnungssollwert $X_{\varepsilon 1\_SOLL}$ zu ermitteln, der eine nominelle, nämlich eine dem momentanen Innendruck bzw. der momentanen Druckdifferenz bei unversehrter Wandung entsprechende Dehnung $\varepsilon_{1,Ref}$ repräsentiert. Der Dehnungssollwert $X_{\varepsilon 1,SOLL}$ kann beispielsweise basierend auf der Berechnungsvorschrift $X_{\varepsilon 1\_SOLL} = X_p \cdot K_p$ bzw. $X_{\varepsilon 1\_SOLL} = X_p \cdot X_{\varepsilon 1,Ref} / X_{p,Ref}$, sehr einfach ermittelt werden, die durch den Druck-Meßwert $X_p$ wie auch durch einen ursprünglichen bzw. initialen Druckübertragungsfaktor $K_p$, nämlich einen zwischen einem bei unversehrter Wandung ermittelten initialen Dehnungsmeßwert $X_{\varepsilon 1,ref}$ sowie einem einen währenddessen ermittelten statischen Innendruck repräsentierenden Druck-Meßwert $X_{p,Ref}$ vermittelnden Proportionalitätsfaktor ($K_p = X_{\varepsilon 1,Ref} / X_{p,Ref}$), bestimmt ist. Der Druckübertragungsfaktor $K_p$ ist u.a. von der Wandstärke sowie dem Elastizitäts-Modul der unversehrten Wandung wie auch deren Geometrie abhängig und kann z.B. bei einer Kalibrierung im Herstellerwerk für das Druckgerät und/oder bei Inbetriebnahme vor Ort meßtechnisch ermittelt und hernach in der Umformer-Elektronik UE abgespeichert werden, beispielsweise im erwähnten nicht-flüchtigen Speicher EEPROM der Meß- und Auswerteschaltung DSV. Alternativ oder in Ergänzung kann nämlicher Druckübertragungsfaktor $K_p$ aber auch für ein bau- oder zumindest typgleiches anderes Druckgerät, beispielsweise im Herstellerwerk, ermittelt und hernach entsprechend an die Umformer-Elektronik bzw. Umformer-Elektroniken anderer typ- oder baugleicher Druckgeräte übertragen werden. Basierend auf dem Dehnungswert $X_{\varepsilon 1}$ sowie dem Dehnungssollwert $X_{\varepsilon 1\_SOLL}$ kann nunmehr in der Meß- und Auswerteschaltung DSV eine Diskrepanz zwischen der aktuell gemessenen Dehnung $\varepsilon_1$ des Wandung und der nominelle Dehnung $\varepsilon_{1,Ref}$ ermittelt werden, beispielsweise inform eines nämliche Diskrepanz repräsentierenden, mithin eine allfällige Schädigung der Wandung indizierenden digitalen Meßwert. Das Meßsystem, mithin das damit gebildete Druckgerät ist gemäß einer weiteren Ausgestaltung der Erfindung daher ferner dafür eingerichtet, abgeleitet von der Dehnung $\varepsilon_1$ und vom Innendruck p+ bzw. der daraus resultierenden Druckdifferenz, beispielsweise also basierend auf dem Dehnungswert $X_{\varepsilon 1}$ sowie dem Druck-Meßwert $X_p$, einen eine Diskrepanz zwischen der aktuell gemessenen Dehnung $\varepsilon_1$ der Wandung und der dafür ermittelten nominellen Dehnung $\varepsilon_{1,Ref}$, beispielsweise nämlich eine Differenz $\varepsilon_1 - \varepsilon_{1,Ref}$ (bzw. $\varepsilon_{1,Ref} - \varepsilon_1$) bzw. einen Quotienten $\varepsilon_1 / \varepsilon_{1,Ref}$ (bzw. $\varepsilon_{1,Ref} / \varepsilon_1$) zwischen

aktuell gemessener und dafür ermittelten nomineller Dehnung, repräsentierenden Dehnungsabweichungswert $X_{\Delta\varepsilon}$ zu ermitteln sowie hernach nämlichen, beispielsweise auch digitalen, Dehnungsabweichungswert $X_{\Delta\varepsilon}$ zur Ermittlung der Schädigung der Wandung zu verwenden, etwa indem der Dehnungsabweichungswert $X_{\Delta\varepsilon}$ mit einem oder mehreren vorab dafür ermittelten Referenz- und/oder Schwellenwerten verglichen wird. Beispielsweise kann die Meß- und Auswerteschaltung DSV so eingerichtet sein, daß sie den Dehnungsabweichungswert $X_{\Delta\varepsilon}$ als eine Differenz $X_{\varepsilon 1} - X_{\varepsilon 1\_SOLL}$ (bzw. $X_{\varepsilon 1\_SOLL} - X_{\varepsilon 1}$) bzw. als einen Quotienten $X_{\varepsilon 1} / X_{\varepsilon 1\_SOLL}$ (bzw. $X_{\varepsilon 1\_SOLL} / X_{\varepsilon 1}$) nämlichen Dehnungs- und Dehnungssollwerts $X_{\varepsilon 1}$, $X_{\varepsilon 1\_SOLL}$ und/oder als eine auf den Dehnungswert $X_{\varepsilon 1}$ normierte Differenz des Dehnungswerts $X_{\varepsilon 1}$ und des Dehnungssollwert $X_{\varepsilon 1\_SOLL}$, beispielsweise in der Form $(X_{\varepsilon 1} - X_{\varepsilon 1\_SOLL}) / X_{\varepsilon 1} = 1 - X_{\varepsilon 1\_SOLL} / X_{\varepsilon 1}$ bzw. $(X_{\varepsilon 1\_SOLL} - X_{\varepsilon 1}) / X_{\varepsilon 1\_SOLL}$ oder $1 - X_{\varepsilon 1} / X_{\varepsilon 1\_SOLL}$, generiert. Alternativ oder in Ergänzung kann die Meß- und Auswerteschaltung DSV ferner auch eingerichtet sein, zwecks Ermittlung der Schädigung der Wandung im Betrieb wiederkehrend einen Quotienten $X_{\varepsilon 1} / X_p$ (bzw. $X_p / X_{\varepsilon 1}$) aus Dehnungswert $X_{\varepsilon 1}$ und Druck-Meßwert $X_p$, mithin einen aktuellen Druckübertragungsfaktor $K_p'$ zu ermitteln und diesen hernach entsprechend mit dem erwähnten Druckübertragungsfaktor $K_p = X_{\varepsilon 1,Ref} / X_{p,Ref}$ (bzw. $1 / K_p$) entsprechend zu vergleichen bzw. eine Abweichung zwischen nämlichem Quotienten $K_p'$ und dem Proportionalitätsfaktor $K_p$ zu ermitteln. Darüberhinaus kann der Dehnungsabweichungswert $X_{\Delta\varepsilon}$ zudem auch zur Ermittlung der Schadenswert $Err_{\Delta w}$ verwendet werden ($Err_{\Delta w} = f[X_{\Delta\varepsilon}]$) bzw. auch selbst bereits als Schadenswert $Err_{\Delta w}$ verwendet werden ($X_{\Delta\varepsilon} \rightarrow Err_{\Delta w}$).

Um einen den momentanen Innedruck bzw. die davon abhängige Druckdifferenz möglichst genau repräsentierenden Druck-Meßwert bereitzustellen ist nach einer weiteren Ausgestaltung der Erfindung ferner vorgesehen, zwecks der Ermittlung der Schädigung der Wandung zusätzlich auch einen innerhalb des Lumens herrschenden statischen Innendrucks, beispielsweise absolut oder relativ zum Umgebungsdruck, zu erfassen und basierend darauf wiederkehrend den Druck-Meßwert $X_p$ aktuell zu ermitteln, so daß also der Druck-Meßwert $X_p$ jeweils den momentanen Innendruck möglichst genau repräsentiert. Eine derartige Ermittlung des Druck-Meßwerts $X_p$ kann z.B. dadurch erfolgen, daß - wie auch in Fig. 1 schematisch dargestellt - nämlicher Innendruck bzw. eine zwischen diesem und dem Umgebungsdruck existierende Druckdifferenz (Relativdruck) mittels eines - hier stromaufwärts des Wandsegments WS - in die Wandung eingelassenen (Absolut- bzw. Relativ-) Drucksensors 80 zunächst sensorisch erfaßt und der jeweilige Druck-Meßwert $X_p$ entsprechend berechnet wird, und hernach der jeweils aktuell ermittelten Druck-Meßwert $X_p$ vom Drucksensor 80 ausgegeben und, z.B. via Kommunikationsschaltung COM oder mittels HART-Multidrop, an die Meß- und Auswerteschaltung DSV übermittelt wird. Der Drucksensor 80 kann dazu beispielsweise direkt an die Umformer-Elektronik, beispielsweise an deren Kommunikationsschaltung COM, angeschlossen sein oder aber den jeweiligen Druck-Meßwert $X_p$ an das erwähnte übergeordnete Meßdatenverarbeitungssystem übermitteln, von wo aus nämlicher Druck-Meßwert $X_p$ an die Umformer-Elektronik hernach entsprechend weiter kommuniziert werden kann. Für den Fall, daß Drucksensor 80 und Wandsegment WS voneinander weit entfernt angeordnet sind und/oder daß das Fluid eine hohe Kompressibilität aufweist, kann es gelegentlich erforderlich sein, den mittels des Drucksensors erfaßten Innendruck unter Berücksichtigung einer Strömungsgeschwindigkeit bzw. einer Massendurchflußrate entsprechend umzurechnen, beispielsweise basierend auf dem in der eingangs erwähnten US-A 2011/0161018 oder dem WO-A 2004/023081 gezeigten Druck-Meß- bzw. Korrekturverfahren, so daß der Druck-Meßwert $X_p$ möglichst genau den tatsächlich auf das Wandsegment WS wirkenden Druck bzw. die damit eingestellte Druckdifferenz repräsentiert. Für den erwähnten Fall, daß das Druckgerät mittels eines In-Line-Meßgeräts für die Messung einer Massen- bzw. Volumendurchflußrate gebildet ist, kann die dafür erforderliche Strömungsgeschwindigkeit bzw. die Massendurchflußrate direkt gemessen und entsprechend bei der Ermittlung der Schädigung der Wandung berücksichtigt werden.

Die vorgenannten, insb. auch die dem Erzeugen des Schadenswerts $Err_{\Delta\varepsilon}$ und/oder des Alarms $X_{fail}$ bzw. anderer der vorgenannten Meßwerte jeweils dienenden, Berechnungsfunktionen können z.B. mittels des oben erwähnten Mikrocomputers der Meß- und Auswerte-Schaltung DSV oder beispielsweise auch einem darin entsprechend vorgesehenen digitalen Signalprozessors DSP sehr einfach realisiert sein. Das Erstellen und Implementieren von entsprechenden Algorithmen, die mit den vorbeschriebenen Formeln korrespondierenden, sowie deren Übersetzung in der Umformer-Elektronik UE entsprechend ausführbare Programm-Codes ist dem Fachmann an und für sich geläufig und bedarf daher - jedenfalls in Kenntnis der vorliegenden Erfindung - keiner detailierteren Erläuterung. Selbstverständlich können vorgenannte Formeln bzw. andere mit der Umformer-Elektronik UE realisierte Funktionalitäten des Meßsystems bzw. des damit gebildeten Druckgeräts auch ohne weiteres ganz oder teilweise mittels entsprechender diskret aufgebauter und/oder hybriden, also gemischt analogdigitalen, Rechenschaltungen in der Umformer-Elektronik UE realisiert werden.

## Patentansprüche

1.  Verfahren zur Überwachung und/oder Überprüfung eines ein von einer, insb. metallischen, Wandung umhülltes Lumen aufweisenden - insb. nämlich eine Rohrleitung und/oder einen Tank und/oder einen Kessel umfassenden - Druckgeräts, nämlich eines Geräts zum Führen und/oder Vorhalten eines, insb.

nominell mit einem statischen Druck von mehr als 1 bar auf die Wandung einwirkenden, Fluids - insb. eines Gases, einer Flüssigkeit oder einer fließfähigen Dispersion - in nämlichem Lumen, welches Verfahren folgende Schritte umfaßt:

- Erfassen einer von einem innerhalb des Lumens herrschenden statischen Innendrucks abhängigen, insb. zeitlich veränderlichen, Dehnung der Wandung zum Ermitteln eines nämliche Dehnung der Wandung repräsentierenden Dehnungswerts ($X_{\varepsilon 1}$);
- Erfassen eines innerhalb des Lumens herrschenden statischen Innendrucks zum Ermitteln eines diesen repräsentierenden Druck-Meßwerts ($X_p$);
- und Verwenden des Dehnungswerts ($X_{\varepsilon 1}$) sowie des Druck-Meßwerts ($X_p$) zum Ermitteln einer Schädigung der Wandung ($\Delta w$), derart

-- daß der Druck-Meßwerts ($X_p$) zum Ermitteln eines eine nominelle Dehnung der Wandung repräsentierender Dehnungssollwerts ($X_{\varepsilon 1\_SOLL}$) verwendet wird,
--daß der Dehnungswert ($X_{\varepsilon 1}$) sowie der Dehnungssollwert ($X_{\varepsilon 1\_SOLL}$) zum Ermitteln eines eine Diskrepanz zwischen der Dehnung der Wandung und der nominelle Dehnung repräsentierenden Dehnungsabweichungswerts ($X_{\Delta\varepsilon}$) verwendet wird,
--und daß der Dehnungsabweichungswert ($X_{\Delta\varepsilon}$) zum Ermitteln der Schädigung der Wandung, insb. nämlich zum Ermitteln eines Schadenswerts ($Err_{\Delta w}$) verwendet wird.

2.  Verfahren nach einem der vorherigen Ansprüche, weiters umfassend einen Schritt des Generierens einer Warnmeldung, die eine, insb. einer für das Druckgerät vorab festgelegten maximal zulässigen Schädigung der Wandung entsprechende und/oder eine Inspektion des Druckgeräts bedingende, kritische Schädigung der Wandung, insb. visuell und/oder akustisch wahrnehmbar, signalisiert, wobei der Schritt des Generierens der Warnmeldung sowohl einen Schritt des Verwendens des Dehnungswerts ($X_{\varepsilon 1}$) als auch einen Schritt des Verwendens des Druck-Meßwerts ($X_p$) umfaßt.

3.  Verfahren nach einem der vorherigen Ansprüche, wobei der Schritt des Ermittelns der Schädigung der Wandung:

- einen Schritt des Verwendens des Dehnungswerts ($X_{\varepsilon 1}$) zum Ermitteln einer Abweichung des Dehnungswerts von einem dafür vorab, insb. für nämliches Druckgerät mit unversehrter Wandung oder für ein baugleiches anderes Druckgerät, ermittelten Referenzwert ($Ref_{\varepsilon 1}$).

**4.** Verfahren nach einem der vorherigen Ansprüche, wobei der Schritt des Ermittelns der Schädigung der Wandung einen Schritt des Verwendens des Dehnungswerts ($X_{\varepsilon 1}$) zum Ermitteln eines Schadenswerts ($Err_{\Delta w}$), nämlich eines Kennzahlwertes für eine nämliche Schädigung der Wandung quantifizierende - insb. eine Abweichung der Dehnungsdifferenz von einem dafür vorab ermittelten Referenzwert ($Ref_{\varepsilon 1}$) repräsentierende - Schadenskennzahl, umfaßt, insb. derart, daß der Schadenswert ($Err_{\Delta\varepsilon}$) eine Abweichung des Dehnungswerts ($X_{\varepsilon 1}$) von einem dafür ermittelten Referenzwert ($Ref_{\varepsilon 1}$) repräsentiert und/oder eine der Bedingungen:

$$Err_{\Delta w} = 1 - \frac{X_{\varepsilon 1}}{Ref_{\varepsilon 1}}$$

und

$$Err_{\Delta w} = Ref_{\varepsilon 1} - X_{\varepsilon 1}$$

erfüllt.

**5.** Verfahren nach dem vorherigen Anspruch,

- wobei der Schritt des Ermittelns der Schädigung der Wandung einen Schritt des Verwendens des Schadenswerts ($Err_{\Delta w}$) umfaßt, insb. derart, daß der Schadenswert ($Err_{\Delta w}$) mit einem dafür vorgegebenen Schwellenwert ($TH_{\Delta w}$) verglichen wird; und/oder
- weiters umfassend einen Schritt des Ermittelns des Referenzwerts ($Ref_{\varepsilon 1}$), insb. derart, daß nämlicher Schritt des Ermitteln des Referenzwerts ($Ref_{\Delta\varepsilon}$) einen Schritt des Verwendens des Druck-Meßwerts ($X_p$) umfaßt.

**6.** Verfahren nach einem der vorherigen Ansprüche, weiters umfassend
Erzeugen wenigstens eines von einer zeitlich veränderlichen Dehnung des Wandsegments (WS) abhängigen Dehnungssignals, insb. mit einer von nämlicher Dehnung abhängigen elektrischen Spannung und/oder einem von nämlicher Dehnung abhängigen elektrischen Strom.

**7.** Verfahren nach dem vorherigen Anspruch, weiters umfassend:

- Verwenden eines am Wandsegement fixierten Dehnungsmeßstreifen zum Erzeugen des wenigstens einen Dehnungssignals; und/oder
- Verwenden des wenigstens einen Dehnungssignals zum Ermitteln des Dehnungswerts ($X_{\varepsilon 1}$).

**8.** Verfahren nach einem der vorherigen Ansprüche, wobei der Schritt des Ermittelns der Schädigung der Wandung einen Schritt des Erfassens einer Temperatur der Wandung, insb. an einer dem Lumen abgewandten Seite der Wandung, umfaßt.

**9.** Verfahren nach der vorherigen Ansprüche, wobei der Schritt des Erfassens des innerhalb des Lumens herrschenden statischen Innendrucks einen Schritt des Verwendens eines, insb. stromaufwärts des Wandsegments (WS), in die Wandung (W) eingelassenen Drucksensors (80) umfaßt.

**10.** Verfahren nach einem der vorherigen Ansprüche, weiters umfassend einen Schritt des Verändern einer zwischen einem innerhalb des Lumens herrschenden statischen Innendruck und einem von außen auf die Wandung wirkenden Umgebungsdruck existierenden Druckdifferenz ‚$p_{rel}$, zum elastischen Deformieren zumindest von Teilbereichen der Wandung, nämlich zumindest eines Wandsegments (WS) der Wandung.

**11.** Verfahren nach dem vorherigen Anspruch,

- wobei der Schritt des Veränderns der Druckdifferenz einen Schritt des Erhöhens des statischen Innendrucks auf einen Druckwert, der, insb. um mehr als 0.5 bar, größer als der Umgebungsdruck ist, umfaßt; und/oder
- wobei der Schritt des Veränderns der Druckdifferenz einen Schritt des Einströmenlassens von Fluid in das Lumen des Druckgeräts umfaßt; und/oder
- wobei der Schritt des Veränderns der Druckdifferenz einen Schritt des Strömenlassens von Fluid durch das Lumen des Druckgeräts umfaßt.

**12.** Verfahren nach dem vorherigen Anspruch,

- wobei der Schritt des Veränderns der Druckdifferenz einen Schritt des Auströmenlassens von Fluid aus dem Lumen des Druckgeräts umfaßt; und/oder
- wobei der Schritt des Veränderns der Druckdifferenz einen Schritt des Erhöhens des statischen Innendrucks auf einen Druckwert, der um mehr als 10 bar, insb. um mehr als 50 bar, größer als der Umgebungsdruck ist, umfaßt.

**13.** Verfahren nach einem der vorherigen Ansprüche,

- wobei das Druckgerät einen Meßwandler, insb. einen Meßwandler vom Vibrationstyp, umfaßt, welcher Meßwandler dafür eingerichtet ist, wenigstens eine, insb. fluiddynamische oder thermodynamische, Meßgröße, insb. eine Volumendurchflußrate, eine Massendurchflußrate, eine Dichte, eine Viskosität, einen Druck oder eine Temperatur, des Fluids zu erfassen und in wenigstens ein mit nämlicher Meßgröße korrespondierendes, insb. elektrisches, Meßsignal zu wandeln,

- und wobei das Druckgerät eine mit dem Meßwandler elektrisch gekoppelt Umformer-Elektronik umfaßt, die dafür eingerichtet ist, das wenigstens eine Meßsignal zu empfangen und unter Verwendung nämlichen Meßsignals wenigstens einen Meßwert zu ermitteln, der die wenigstens eine Meßgröße repräsentiert.

14. Verfahren nach dem vorherigen Anspruch

- wobei der Meßwandler eine, insb. mittels wenigstens eines Rohrs gebildete, Rohranordnung zum Führen des strömungsfähigen Mediums aufweist, und das Lumen des Druckgeräts mittels der Rohranordnung gebildet ist, insb. derart, daß die Rohranordnung das Wandsegment (WS) inkludiert; und/oder

- wobei der Schritt des Ermittelns der Schädigung der Wandung unter Verwendung der Umformer-Elektronik ausgeführt wird.

15. Meßsystem zum Ermitteln von wenigstens einer, insb. fluiddynamischen und/oder thermodynamischen, Meßgröße, insb. einer Volumendurchflußrate, einer Massendurchflußrate, einer Dichte, einer Viskosität, eines Drucks oder einer Temperatur, eines Fluids, insb. eines Gases, einer Flüssigkeit oder einer fließfähigen Dispersion, repräsentierenden Meßwerten und zur Verwirklichung eines Verfahrens gemäß einem der vorherigen Ansprüche, welches Meßsystem umfaßt:

- ein von einer Wandung (W) umhülltes Lumen aufweisendes Druckgerät;

- wenigstens einen an einem Wandsegment (WS) der Wandung fixierten Dehnungssensor (61) zum Erzeugen eines von einer zeitlich veränderlichen Dehnung, $\varepsilon_1$, des Wandsegments (WS) abhängigen Dehnungssignals (d1), insb. mit einer von nämlicher Dehnung abhängigen elektrischen Spannung und/oder einem von nämlicher Dehnung abhängigen elektrischen Strom;

- einen Drucksensor (80) zum Ermitteln des den innerhalb des Lumens herrschenden statischen Innendruck repräsentierenden Druck-Meßwert $(X_p)$;

- sowie eine mit dem Dehnungssensor elektrisch gekoppelte Umformer-Elektronik (UE),

-- die dafür eingerichtet ist, das Dehnungssignal zu empfangen und unter Verwendung des Dehnungssignals den Dehnungswert $(X_{\varepsilon 1})$ zu generieren,

-- und die dafür eingerichtet ist, unter Verwendung des Dehnungswerts $(X_{\varepsilon 1})$ und des Druck-Meßwerts $(X_p)$ die Schädigung der Wandung ($\Delta$w) zu ermitteln.

16. Meßsystem nach dem vorherigen Anspruch,

- wobei das Druckgerät einen Meßwandler, insb. einen Meßwandler vom Vibrationstyp, mit einer mittels wenigstens eines, insb. zumindest abschnittsweise gekrümmten, Rohrs gebildeten Rohranordnung zum Führen des Fluids aufweist, welcher Meßwandler dafür eingerichtet ist, wenigstens ein mit nämlicher Meßgröße korrespondierendes, insb. elektrisches, Meßsignal zu liefern,

- wobei das Lumen des Druckgeräts mittels der Rohranordnung gebildet ist,

- und wobei die Umformer-Elektronik mit dem Meßwandler elektrisch gekoppelt ist.

17. Meßsystem gemäß dem vorherigen Anspruch,

- wobei der wenigstens eine Dehnungssensor an dem wenigstens einen Rohr der Rohranordnung fixiert ist; und/oder

- wobei die Rohranordnung des Meßwandlers wenigstens zwei, insb. strömungstechnisch parallele Strömungspfade der Rohranordnung bildende und/oder vier und/oder baugleiche, Rohre aufweist; und/oder

- wobei die Umformer-Elektronik dafür eingerichtet ist, das wenigstens eine Meßsignal zu empfangen sowie unter Verwendung nämlichen Meßsignals einen Meßwert zu ermitteln, der eine physikalische, insb. fluiddynamische und/oder thermodynamische, Meßgröße, insb. eine Volumendurchflußrate, eine Massendurchflußrate, eine Dichte, eine Viskosität, einen Druck oder eine Temperatur, des Fluids repräsentiert; und/oder

- wobei die Umformer-Elektronik dafür eingerichtet ist, wenigstens ein den Meßwandler ansteuerndes, insb. im Meßwandler einen mit der wenigstens einen Meßgröße korrespondierenden Meßeffekt induzierendes, elektrisches Treibersignal zu liefern.

18. Meßsystem nach einem der Ansprüche 15 bis 17, wobei der Drucksensor stromaufwärts des Wandsegments (WS) in die Wandung (W) eingelassen ist.

## Claims

1. Procedure to monitor and/or check a pressure device having an interior channel surrounded by a wall, particularly a metal wall - particularly comprising a pipe and/or a tank and/or a boiler - particularly a device designed to conduct and/or maintain a fluid - particularly a gas, a liquid or a flowing dispersion - particularly acting nominally on the wall with a static pressure greater than 1 bar in said interior channel, wherein said procedure comprises the following steps:

- Measurement of an elongation of the wall, which depends on a static internal pressure present in the interior channel, and particularly varies over time, for the purpose of determining an elongation value ($X_{\varepsilon 1}$) that represents said elongation of the wall;
- Measurement of a static internal pressure present in the interior channel, for the purpose of determining a pressure measured value ($X_p$) that represents said static internal pressure;
- and use of the elongation value ($X_{\varepsilon 1}$) and the pressure measured value ($X_p$) to determine damage to the wall ($\Delta w$), in such a way that

-- the pressure measured value ($X_p$) is used to determine a target elongation value ($X_{\varepsilon 1\_SOLL}$) that represents a nominal elongation of the wall,
-- the elongation value ($X_{\varepsilon 1}$) and the target elongation value ($X_{\varepsilon 1\_SOLL}$) are used to determine an elongation deviation value ($X_{\Delta \varepsilon}$) that represents a discrepancy between the elongation of the wall and the nominal elongation,
-- and that the elongation deviation value ($X_{\Delta \varepsilon}$) is used to determine the damage to the wall, particularly to determine a damage value ($Err_{\Delta w}$).

2. Procedure as claimed in one of the previous claims, further comprising a step involving the generation of a warning message which signals, particularly in a manner that can be perceived visually or acoustically, critical damage to the wall corresponding to a maximum admissible damage to the wall which is determined in advance for the pressure device and/or which is cause for an inspection of the pressure device, wherein the step to generate the warning message comprises both a step to use the elongation value ($X_{\varepsilon 1}$) and a step to use the pressure measured value ($X_p$).

3. Procedure as claimed in one of the previous claims, wherein the step to determine the damage to the wall comprises:

- a step to use the elongation value ($X_{\varepsilon 1}$) to determine a deviation in the elongation value in relation to a reference value ($Ref_{\varepsilon 1}$) determined in advance for this purpose, particularly for said pressure device with an intact wall or for another pressure device of an identical design.

4. Procedure as claimed in one of the previous claims, wherein the step to determine damage to the wall involves a step to use the elongation value ($X_{\varepsilon 1}$) to determine a damage value ($Err_{\Delta w}$), particularly a characteristic value for a damage indicator quantifying said damage to the wall - particularly representing a deviation in the elongation difference in relation to a reference value ($Ref_{\varepsilon 1}$) determined in advance for this purpose - particularly in such a way that the damage value ($Err_{\Delta w}$) represents a deviation in the elongation value ($X_{\varepsilon 1}$) in relation to a reference value ($Ref_{\varepsilon 1}$) determined for this purpose and/or meets one of the following conditions:

$$Err_{\Delta w} = 1 - \frac{X_{\varepsilon 1}}{Ref_{\varepsilon 1}}$$

and

$$Err_{\Delta w} = Ref_{\varepsilon 1} - X_{\varepsilon 1}.$$

5. Procedure as claimed in the previous claim

- wherein the step to determine damage to the wall comprises a step involving the use of the damage value ($Err_{\Delta w}$), particularly in such a way that the damage value ($Err_{\Delta w}$) is compared against a threshold value ($TH_{\Delta w}$) predefined for this purpose; and/or
- further comprising a step to determine the reference value ($Ref_{\varepsilon 1}$), particularly in such a way that said step to determine the reference value ($Ref_{\varepsilon 1}$) comprises a step involving the use of the pressure measured value ($X_p$).

6. Procedure as claimed in one of the previous claims, further comprising the following step:
Generation of at least an elongation signal that depends on a variable elongation of the wall segment (WS) over time, particularly with an electrical voltage that depends on said elongation and/or an electrical current that depends on said elongation.

7. Procedure as claimed in one of the previous claims, further comprising

- Use of an elongation gauge fixed on the wall segment for the generation of the at least one elongation signal; and/or
- Use of the at least one elongation signal to determine the elongation value ($X_{\varepsilon 1}$).

8. Procedure as claimed in one of the previous claims, wherein the step to determine damage to the wall comprises a step involving the measurement of a temperature of the wall, particularly on a side of the wall facing away from the interior channel.

9. Procedure as claimed in the previous claims, wherein the step to measure the static internal pressure present in the interior channel comprises a step involving the use of a pressure sensor (80) integrated in the wall (W), particularly upstream from the wall segment (WS).

10. Procedure as claimed in one of the previous claims, further comprising a step involving the variation of a pressure difference, $p_{rel}$, which exists between a static internal pressure present in the interior channel and an ambient pressure acting on the wall from the outside, for the elastic deformation at least of parts of the wall, particularly at least of a wall segment (WS) of the wall (W).

11. Procedure as claimed in the previous claim,

   - wherein the step involving the change in the pressure difference comprises a step to increase the static internal pressure to a pressure value greater than the ambient pressure, particularly by more than 0.5 bar; and/or
   - wherein the step involving the change in the pressure difference comprises a step to permit fluid to flow into the interior channel of the pressure device; and/or
   - wherein the step involving the change in the pressure difference comprises a step to permit fluid to flow through the interior channel of the pressure device.

12. Procedure as claimed in the previous claim,

   - wherein the step involving the change in the pressure difference comprises a step to permit fluid to flow out of the interior channel of the pressure device; and/or
   - wherein the step involving the change in the pressure difference comprises a step to increase the static internal pressure to a pressure value that is greater than the ambient pressure by 10 bar, particularly greater than 50 bar.

13. Procedure as claimed in one of the previous claims,

   - wherein the pressure device comprises a transducer, particularly a vibronic-type transducer, wherein said transducer is designed to capture at least a measured variable, particularly a fluid-dynamic or thermodynamic variable, particularly a volume flow rate, a mass flow rate, a density, a viscosity, a pressure or a temperature, of the fluid, and to convert it at least to a measuring signal, particularly electrical, that corresponds to said measured variable,
   - and wherein the pressure device comprises a transmitter electronics unit electrically coupled to the transducer, said electronics unit being designed to receive the at least one measuring signal and to determine at least a measured value using said measuring signal, said measured value representing the at least one measured variable.

14. Procedure as claimed in the previous claim,

   - wherein the transducer comprises a pipe arrangement, particularly formed by at least one pipe, said arrangement being designed to conduct the flowing medium, and the interior channel of the pressure device is formed by the pipe arrangement, particularly in such a way that the pipe arrangement includes the wall segment (WS); and/or
   - wherein the step to determine damage to the wall is performed using the transmitter electronics unit.

15. Measuring system designed to determine measured values representing at least a measured variable, particularly a fluid-dynamic and/or thermodynamic measured variable, particularly a volume flow rate, a mass flow rate, a density, a viscosity, a pressure or a temperature, of a fluid, particularly a gas, a liquid or a flowing dispersion, and to implement a procedure as claimed in one of the previous claims, said measuring system comprising:

   - a pressure device comprising an interior channel surrounded by a wall (W);
   - at least one elongation sensor (61) fixed on a wall segment (WS) of the wall (W) and designed to generate an elongation signal (d1) depending on an elongation variable over time, $\varepsilon_1$, of the wall segment (WS), particularly with an electrical voltage that depends on said elongation and/or an electrical current that depends on said elongation;
   - a pressure sensor (80) designed to determine the pressure measured value ($X_p$) representing the static internal pressure present in the interior channel;
   - as well as a transmitter electronics unit (UE) electrically coupled to the elongation sensor,

      -- wherein said electronics unit is designed to receive the elongation signal and to generate the elongation value ($X_{\varepsilon 1}$) using the elongation signal,

-- and wherein said electronics unit is designed to determine damage to the wall ($\Delta$w) using the elongation value ($X_{\varepsilon1}$) and the pressure measured value ($X_p$).

16. Measuring system as claimed in the previous claim,

   - wherein the pressure device comprises a transducer, particularly a vibronic-type transducer, with a pipe arrangement to conduct the fluid, formed by means of at least a pipe, particularly at least partially curved, wherein said transducer is designed to deliver at least a measuring signal that corresponds to said measured variable, particularly an electrical measuring signal,
   - wherein the interior channel of the pressure device is formed by means of the pipe arrangement,
   - and wherein the transmitter electronics unit is electrically coupled to the transducer.

17. Measuring system as claimed in the previous claim,

   - wherein the at least one elongation sensor is fixed on the at least one pipe of the pipe arrangement; and/or
   - wherein the pipe arrangement of the transducer comprises at least two pipes, particularly forming flow paths, which are parallel in terms of flow, of the pipe arrangement and/or four pipe and/or pipes of an identical design; and/or
   - wherein the transmitter electronics unit is designed to receive the at least one measuring signal, and to determine, using said measuring signal, a measured value that represents a physical measured variable, particularly a fluid-dynamic and/or thermodynamic variable, of the fluid, particularly a volume flow rate, a mass flow rate, a density, a viscosity, a pressure or a temperature; and/or
   - wherein the transmitter electronics unit is designed to provide at least an electrical driver signal which controls the transducer, particularly inducing a measuring effect in the transducer that corresponds to the at least one measured variable.

18. Measuring system as claimed in one of the claims 15 to 17, wherein the pressure sensor is integrated in the wall (W) upstream from the wall segment (WS).

## Revendications

1. Procédé destiné à la surveillance et/ou à la vérification d'un appareil sous pression présentant un canal intérieur entouré par une paroi, notamment une paroi métallique - notamment comprenant une conduite et/ou un réservoir et/ou une cuve - à savoir un appareil destiné au guidage et/ou à la retenue d'un fluide

   - notamment un gaz, un liquide ou une dispersion fluide - agissant nominalement sur la paroi avec une pression statique supérieure à 1 bar, dans ledit canal intérieur, lequel procédé comprend les étapes suivantes :
   - Mesure d'un allongement de la paroi, qui dépend d'une pression interne statique régnant dans le canal intérieur, notamment qui varie avec le temps, afin de déterminer une valeur d'allongement ($X_{\varepsilon1}$) représentant le dit allongement de la paroi ;
   - Mesure d'une pression interne statique régnant dans le canal intérieur, afin de déterminer une valeur mesurée de pression ($X_p$) représentant ladite pression interne statique ;
   - et utilisation de la valeur d'allongement ($X_{\varepsilon1}$) ainsi que de la valeur mesurée de pression ($X_p$) pour déterminer un endommagement de la paroi ($\Delta$w), de telle sorte

   -- que la valeur mesurée de pression ($X_p$) est utilisée pour déterminer une valeur théorique d'allongement ($X_{\varepsilon1\_SOLL}$) représentant un allongement nominal de la paroi,
   -- que la valeur d'allongement ($X_{\varepsilon1}$) ainsi que la valeur théorique d'allongement ($X_{\varepsilon1\_SOLL}$) sont utilisées pour déterminer une valeur d'écart d'allongement ($X_{\Delta\varepsilon}$) représentant un écart entre l'allongement de la paroi et l'allongement nominal,
   -- et que la valeur d'écart d'allongement ($X_{\Delta\varepsilon}$) est utilisée pour déterminer l'endommagement de la paroi, notamment pour déterminer une valeur d'endommagement ($Err_{\Delta w}$).

2. Procédé selon l'une des revendications précédentes, comprenant en outre une étape consistant à générer un message d'avertissement qui signale, notamment de manière perceptible visuellement et/ou acoustiquement, un endommagement critique de la paroi correspondant à un endommagement maximal admissible de la paroi déterminé à l'avance pour l'appareil sous pression et/ou conditionnant une inspection de l'appareil sous pression, l'étape de génération du message d'avertissement comprenant à la fois une étape consistant à utiliser la valeur d'allongement ($X_{\varepsilon1}$) et une étape consistant à utiliser la valeur mesurée de pression ($X_p$).

3. Procédé selon l'une des revendications précédentes, pour lequel l'étape consistant à déterminer l'endommagement de la paroi comprend :

- une étape consistant à utiliser la valeur d'allongement ($X_{\varepsilon 1}$) en vue de la détermination d'un écart de la valeur d'allongement par rapport à une valeur de référence ($Ref_{\varepsilon 1}$) déterminée au préalable à cet effet, notamment pour le même appareil sous pression présentant une paroi intacte ou pour un autre appareil sous pression de construction identique.

4. Procédé selon l'une des revendications précédentes, pour lequel l'étape consistant à déterminer l'endommagement de la paroi comprend une étape consistant à utiliser la valeur d'allongement ($X_{\varepsilon 1}$) en vue de déterminer une valeur d'endommagement ($Err_{\Delta w}$), à savoir un indice d'endommagement quantifiant une valeur d'indice pour un endommagement de la paroi - notamment représentant un écart de la différence d'allongement par rapport à une valeur de référence ($Ref_{\varepsilon 1}$) déterminée au préalable à cet effet - notamment de telle sorte que la valeur d'endommagement ($Err_{\Delta w}$) représente un écart de la valeur d'allongement ($X_{\varepsilon 1}$) par rapport à une valeur de référence ($Ref_{\varepsilon 1}$) déterminée à cet effet et/ou répond à l'une des conditions suivantes :

$$Err_{\Delta w} = 1 - \frac{X_{\varepsilon 1}}{Ref_{\varepsilon 1}}$$

et

$$Err_{\Delta w} = Ref_{\varepsilon 1} - X_{\varepsilon 1}.$$

5. Procédé selon la revendication précédente

- pour lequel l'étape consistant à déterminer l'endommagement de la paroi comprend une étape consistant à utiliser la valeur d'endommagement ($Err_{\Delta w}$), notamment de telle sorte à ce que la valeur d'endommagement ($Err_{\Delta w}$) soit comparée avec une valeur seuil ($TH_{\Delta w}$) prédéfinie à cette fin ; et/ou
- comprenant en outre une étape consistant à déterminer la valeur de référence ($Ref_{\varepsilon 1}$), notamment de telle sorte que cette même étape consistant à déterminer la valeur de référence ($Ref_{\varepsilon 1}$) comprend une étape consistant à utiliser la valeur mesurée de pression ($X_p$).

6. Procédé selon l'une des revendications précédentes, comprenant en outre l'étape suivante :
Génération d'au moins un signal d'allongement dépendant de l'allongement variable dans le temps du segment de paroi (WS), notamment avec une tension électrique dépendant de l'allongement et/ou un courant électrique dépendant de l'allongement.

7. Procédé selon l'une des revendications précédentes, comprenant en outre

- Utilisation d'une jauge de contrainte fixée au segment de paroi pour la génération d'au moins un signal d'allongement ; et/ou
- Utilisation de l'au moins un signal d'allongement pour la détermination de la valeur d'allongement ($X_{\varepsilon 1}$).

8. Procédé selon l'une des revendications précédentes, pour lequel l'étape consistant à déterminer l'endommagement de la paroi comprend une étape consistant à mesurer une température de la paroi, notamment sur un côté de la paroi éloigné du canal intérieur.

9. Procédé selon les revendications précédentes, pour lequel l'étape consistant à mesurer la pression interne statique régnant dans le canal intérieur comprend une étape consistant à utiliser un capteur de pression (80) intégré dans la paroi (W), notamment en amont du segment de paroi (WS).

10. Procédé selon l'une des revendications précédentes, comprenant en outre une étape consistant à varier une différence de pression, $p_{rel}$, existant entre une pression interne statique régnant dans le canal intérieur et une pression ambiante agissant sur la paroi depuis l'extérieur, en vue de déformer élastiquement au moins des zones partielles de la paroi, notamment au moins un segment de paroi (WS) de la paroi (W).

11. Procédé selon la revendication précédente,

- pour lequel l'étape consistant à varier la différence de pression comprend une étape consistant à augmenter la pression interne statique à une valeur de pression supérieure à la pression ambiante, notamment de plus de 0,5 bar ; et/ou
- pour lequel l'étape consistant à varier la différence de pression comprend une étape consistant à permettre au fluide de s'écouler dans le canal intérieur de l'appareil sous pression ; et/ou
- pour lequel l'étape consistant à varier la différence de pression comprend une étape consistant à laisser le fluide s'écouler à travers le canal intérieur de l'appareil sous pression.

12. Procédé selon la revendication précédente,

- pour lequel l'étape consistant à varier la différence de pression comprend une étape consistant à permettre au fluide de s'écouler hors du canal intérieur de l'appareil sous pression ; et/ou
- pour lequel l'étape consistant à varier la différence de pression comprend une étape consistant à augmenter la pression interne statique à une valeur de pression, qui est supérieure de plus de 10 bar, notamment de plus de 50 bar, à la pression ambiante.

13. Procédé selon l'une des revendications précédentes,

    - pour lequel l'appareil sous pression comprend un transducteur, notamment un transducteur du type à vibrations, lequel transducteur est conçu pour détecter au moins une grandeur de mesure, notamment fluidodynamique ou thermodynamique, notamment un débit volumique, un débit massique, une densité, une viscosité, une pression ou une température, du fluide, et pour la convertir en au moins un signal de mesure, notamment électrique, correspondant à la même grandeur de mesure,
    - et pour lequel l'appareil sous pression comprend une électronique de transmetteur couplée électriquement avec le transducteur, laquelle électronique est conçue pour recevoir l'au moins un signal de mesure et à déterminer au moins une valeur mesurée en utilisant le même signal de mesure, laquelle valeur mesurée représente l'au moins une grandeur de mesure.

14. Procédé selon la revendication précédente,

    - pour lequel le transducteur comprend un agencement de tubes, notamment formé au moyen d'au moins un tube, lequel agencement est destiné au guidage du produit apte à s'écouler, et le canal intérieur de l'appareil sous pression est formé au moyen de l'agencement de tubes, notamment de telle sorte que l'agencement de tubes comprend le segment de paroi (WS) ; et/ou
    - pour lequel l'étape consistant à déterminer l'endommagement de la paroi est exécutée en utilisant l'électronique de transmetteur.

15. Système de mesure destiné à la détermination de valeurs de mesure représentant au moins une grandeur de mesure, notamment fluidodynamique et/ou thermodynamique, notamment un débit volumique, un débit massique, une densité, une viscosité, une pression ou une température, d'un fluide, notamment un gaz, un liquide ou une dispersion fluide, et destiné à mettre en œuvre un procédé selon l'une des revendications précédentes, lequel système de mesure comprend :

    - un appareil sous pression comprenant un canal intérieur entouré par une paroi (W) ;
    - au moins un capteur d'allongement (61) fixé sur un segment de paroi (WS) de la paroi (W) et destiné à générer un signal d'allongement (d1) dépendant d'un allongement variable dans le temps, $\varepsilon_1$, du segment de paroi (WS), notamment avec une tension électrique dépendant du même allongement et/ou un courant électrique dépendant du même allongement;
    - un capteur de pression (80) destiné à la détermination de la valeur mesurée de pression ($X_p$) représentant la pression interne statique régnant dans le canal intérieur ;
    - ainsi qu'une électronique de transmetteur (UE) couplée électriquement avec le capteur d'allongement,

        -- laquelle électronique est conçue pour recevoir le signal d'allongement et générer la valeur d'allongement ($X_{\varepsilon 1}$) en utilisant le signal d'allongement,
        -- et laquelle électronique est conçue pour déterminer l'endommagement de la paroi ($\Delta w$) en utilisant la valeur d'allongement ($X_{\varepsilon 1}$) et la valeur mesurée de pression ($X_p$).

16. Système de mesure selon la revendication précédente,

    - pour lequel l'appareil sous pression comprend un transducteur, notamment un transducteur du type à vibration, avec un agencement de tubes pour le guidage du fluide, formé au moyen d'au moins un tube, notamment au moins partiellement courbé, lequel transducteur est conçu pour fournir au moins un signal de mesure correspondant à la dite grandeur de mesure, notamment un signal de mesure électrique,
    - pour lequel le canal intérieur de l'appareil sous pression est formé au moyen d'un agencement de tubes,
    - et pour lequel l'électronique de transmetteur est couplée électriquement avec le transducteur.

17. Système de mesure selon la revendication précédente,

    - pour lequel l'au moins un capteur d'allongement est fixé à l'au moins un tube de l'arrangement de tubes ; et/ou
    - pour lequel l'arrangement de tubes du transducteur comprend au moins deux tubes, notamment formant des chemins d'écoulement parallèles en terme d'écoulement de l'arrangement de tubes et/ou quatre tubes et/ou des tubes de construction identique ; et/ou
    - pour lequel l'électronique de transmetteur est conçue pour recevoir l'au moins un signal de mesure, ainsi que pour déterminer, à l'aide de ce même signal de mesure, une valeur mesurée qui représente une grandeur physique, notamment fluidodynamique et/ou thermodynamique, du fluide, notamment un débit volumique, un débit massique, une densité, une viscosité, une pression ou une température ; et/ou

- pour lequel l'électronique de transmetteur est conçue pour fournir au moins un signal d'attaque électrique qui commande le transducteur, notamment induisant dans le transducteur un effet de mesure correspondant à l'au moins une grandeur de mesure.

18. Système de mesure selon l'une des revendications précédentes 15 à 17, pour lequel le capteur de pression est intégré dans la paroi (W) en amont du segment de paroi (WS).

**Fig. 1**

Fig. 2

EP 3 008 441 B1

**Fig. 3**

$X_x\{X_m, X\rho..\}$

$X_{\varepsilon 1}$

$Err_{\Delta w}(X_{\varepsilon 1}, Ref_{\varepsilon 1})$

$X_{fail}(Err_{\Delta w}, TH_{\Delta w})$

$Ref_{\Delta \varepsilon}, TH_{\Delta w}$

$m \; \rho \; \eta \; p \; \vartheta$

EP 3 008 441 B1

**Fig. 4a**

**Fig. 4b**

*Fig. 5*

*Fig. 6*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 816807 A
- EP 919793 A
- EP 1001254 A
- US 20010029790 A
- US 20040261541 A
- US 20050039547 A
- US 20060266129 A
- US 20070095153 A
- US 20070234824 A
- US 20080141789 A
- US 20110113896 A
- US 20110161018 A
- US 20110219872 A
- US 20120123705 A
- US 4680974 A
- WO 2005050145 A
- WO 2009134268 A
- WO 9015310 A
- WO 9516897 A
- WO 9605484 A
- WO 9740348 A
- WO 9807009 A
- WO 9939164 A
- JP 2009041924 A
- US 4546649 A
- US 5796011 A
- US 7284449 B
- US 7017424 B
- US 6910366 B
- US 6840109 B
- US 5576500 A
- US 6651513 B
- US 20050072238 A
- US 20060225493 A
- US 20080072688 A
- US 20110265580 A
- WO 2004023081 A
- WO 2006009548 A
- WO 2008042290 A
- WO 2007040468 A
- WO 2013060659 A
- EP 2012070924 W